(19) Europäisches Patentamt / European Patent Office / Office européen des brevets

(11) **EP 3 015 960 B1**

(12) **EUROPEAN PATENT SPECIFICATION**

(45) Date of publication and mention
of the grant of the patent:
**29.07.2020 Bulletin 2020/31**

(51) Int Cl.:
**G06F 3/041** *(2006.01)*    **G06F 3/044** *(2006.01)*

(21) Application number: **15190868.8**

(22) Date of filing: **21.10.2015**

(54) **METHOD FOR OPERATING SENSOR PANEL AND ELECTRONIC DEVICE FOR SUPPORTING THE SAME**

VERFAHREN ZUM BETREIBEN EINER SENSORTAFEL UND ELEKTRONISCHE UNTERSTÜTZUNGSVORRICHTUNG DAFÜR

PROCÉDÉ DE FONCTIONNEMENT DE PANNEAU TACTILE ET DISPOSITIF ÉLECTRONIQUE POUR SUPPORTER CELUI-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.10.2014 KR 20140146321**

(43) Date of publication of application:
**04.05.2016 Bulletin 2016/18**

(73) Proprietors:
- **Samsung Electronics Co., Ltd.
  Gyeonggi-do 16677 (KR)**
- **Research & Business Foundation Sungkyunkwan University
  Gyeonggi-do 16419 (KR)**

(72) Inventors:
- **HAN, Dong Kyoon
  13586 Gyeonggi-do (KR)**
- **KIM, Sang Hyo
  16419 Gyeonggi-do (KR)**
- **LEE, Yong Man
  13558 Gyeonggi-do (KR)**

(74) Representative: **HGF
1 City Walk
Leeds LS11 9DX (GB)**

(56) References cited:
**US-A1- 2007 109 274    US-A1- 2011 042 152
US-A1- 2012 056 841    US-A1- 2012 182 259
US-A1- 2013 127 779**

- **HIMAL A SURAWEERA ET AL: "Error Performance Analysis of Clipped Alamouti Space-Time Coded OFDM Systems", TENCON 2005 2005 IEEE REGION 10, IEEE, PI, 21 November 2005 (2005-11-21), - 24 November 2005 (2005-11-24), pages 1-6, XP031015558, ISBN: 978-0-7803-9311-0**
- **MULLER S H ET AL: "A comparison of peak power reduction schemes for OFDM", GLOBAL TELECOMMUNICATIONS CONFERENCE, 1997. GLOBECOM '97., IEEE PHOENIX, AZ, USA 3-8 NOV. 1997, NEW YORK, NY, USA,IEEE, US, vol. 1, 3 November 1997 (1997-11-03), pages 1-5, XP010254553, DOI: 10.1109/GLOCOM.1997.632501 ISBN: 978-0-7803-4198-2**

**Description**

PRIORITY

BACKGROUND OF THE INVENTION

1. Field of the Invention

The present disclosure relates to operating a sensor panel. More particularly, the present disclosure relates to a method for operating a sensor panel to perform multi-channel drive or multi-channel detecting by operating at least one unique driving signal according to at least one code information in which orthogonal frequency division multiplexing (OFDM) and code division multiplexing (CDM) are interchangeably used and an electronic device for supporting the same.

2. Background of the Invention

All electronic devices, such as smartphones of the related art, include a sensor panel functioning as an input unit. The sensor panel of the related art operates to detect a position of a touched object.

In the above-mentioned sensor panel, a transmit (Tx) module associated with driving the sensor panel may provide a signal of a certain voltage and a receiving (Rx) module associated with driving the sensor panel may receive and compare signals corresponding to signals provided to the sensor panel to determine whether a touch occurs and a touch point. Since this sensor panel of the related art provides a driving signal of a specified frequency band to the entire panel, a detection speed is decreased. In addition, since signals generated by peripherals of an electronic device operate as noises, an error occurs in the sensor panel of the related art. In addition, while a signal to noise ratio (SNR) is improved using a charge amplifier which integrates charges with respect to operating the sensor panel of the related art, a drive and detection speed of the sensor panel may decrease in reverse proportion to a period where the charge amplifier integrates the charges.

Therefore, a need exists for a method for operating a sensor panel to perform multi-channel drive or multi-channel detecting by operating at least one unique driving signal according to at least one code information in which orthogonal frequency division multiplexing (OFDM) and code division multiplexing (CDM) are interchangeably used and an electronic device for supporting the same.

The above information is presented as background information only to assist with an understanding of the present disclosure. No determination has been made, and no assertion is made, as to whether any of the above might be applicable as prior art with regard to the present disclosure.

US-2012/056841-A1 discloses a touch screen system comprising a capacitive touch screen including a plurality of row conductors and a column conductor. A plurality of cotemporaneous orthogonal excitation signals are simultaneously driven onto the row conductors, respectively. The capacitively coupled signals on the column conductor may be influenced by a touch on the capacitive touch screen. Receiver circuitry includes a sense amplifier coupled to generate an amplifier output signal in response to signals capacitively coupled onto the column conductor. WHT-based circuitry determines amounts of signal contribution capacitively coupled by each of the excitation signals, respectively, to the amplifier output signal.

In US 2012/182259 A1, methods and apparatus are provided for identifying coordinates of a touch area on a touch screen panel based on a capacitive scheme. The touch screen panel has a first electrode layer having first electrode lines aligned in a first direction and a second electrode layer having second electrode lines aligned in a second direction. A signal generation unit generates a spread spectrum signal and supplies the spread spectrum signal to the first electrode layer. A signal restoration unit processes a band restoration for a signal input from the second electrode layer. A touch area coordinate identification unit identifies the coordinates of the touch area on the touch screen panel from a signal input from the signal restoration unit. US 2011/042152 A1 discloses a touch sensing apparatus utilizing the characteristics of orthogonal vectors. A random spread spectrum (RSS) signal or a periodic wave is used to modulate a driving signal so as to driving a row of a sensing array, and the RSS signal or periodic wave is also use to extract touch information of a node from a sensing signal measured from a column of the sensing array. The node is an intersection of the driven row and the measured column. When different RSS signals and/or periodic waves are used to drive multiple rows simultaneously, multipoint touching information can be obtained from the same sensing signal at the same time by respectively using the RSS signals and/or periodic waves to extract touching information of multiple points which are the intersections of the driven rows and the measured column. In US 2007/109274 A1, methods, systems and devices are disclosed for detecting a position-based attribute of a finger, stylus or other object with a touchpad or other sensor having a touch-sensitive region that includes a plurality of electrodes. Modulation signals for one or more electrodes are produced as a function of any number of distinct digital codes. The modulation signals are applied to an associated at least one of the plurality of electrodes to obtain a resultant signal that is electrically affected by the position of the object.

The resultant signal is demodulated using the plurality of distinct digital codes to discriminate electrical effects produced by the object. The position-based attribute of the object is then determined with respect to the plurality of electrodes from the electrical effects. US 2013/127779 A1 discloses an input device that simultaneously transmits a multiplexed signal across two or more transmitter electrodes used in touch detection. The multiplexed includes two or more component signals that are transmitted on respective electrodes (or channels). The component signals are then decoded and correlated to indicate a positional location of an input object. Various multiplexing schemas (e.g., code division multiplexing, frequency division multiplexing, orthogonal frequency division multiplexing, and the like) may be used to generate the multiplex signal and then demultiplex the received results.

## SUMMARY OF THE INVENTION

It is an aim of certain embodiments of the present invention to provide a method for operating a sensor panel to perform multi-channel drive or multi-channel detection by operating at least one unique driving signal according to at least one code information in which orthogonal frequency division multiplexing (OFDM) and code division multiplexing (CDM) are interchangeably or substantially simultaneously used and an electronic device for supporting the same.

Another aim of certain embodiments of the present invention is to provide a method for operating a sensor panel to provide an improved drive speed, improved noise suppression characteristics, improved sensitivity, and improved touch accuracy according to driving signal parallelism and have a simplified hardware structure and an electronic device for supporting the same.

In accordance with an aspect of the present disclosure, there is provided an electronic device comprising: a sensor panel configured to form an electric field based on a driving signal; and a sensor operation module configured to provide to the sensor panel a driving signal, which has a code sequence in which orthogonal codes of a code division multiplexing, CDM, scheme are applied to orthogonal carriers of an orthogonal frequency division multiplexing, OFDM, scheme and that has a peak to average power ratio, PAPR, of a specified value, wherein the sensor operation module is further configured to perform at least one of: peak reducing transmission signal composition of multiplying a signal generated by the code sequence by a PAPR reducing signal, PRS, such that the PAPR or noise level of the signal corresponding to the code sequence is the specified value, or amplitude clipping of a signal such that a PAPR or noise level of a signal corresponding to the code sequence is a specified value and compensating a distorted orthogonal signal of the clipped signal, a specified number of times.

In accordance with another aspect of the present disclosure, there is provided a method for operating a sensor panel, the method comprising: providing a driving signal, which has a code sequence in which orthogonal codes of a code division multiplexing, CDM, scheme are applied to orthogonal carriers of an orthogonal frequency division multiplexing, OFDM, scheme and that has a peak to average power ratio, PAPR, of a specified value with respect to driving the sensor panel, to the sensor panel; receiving a signal from the sensor panel that corresponds to the driving signal provided to the sensor panel; and detecting whether detection occurs or a detection point based on channel estimation of the received signal; further comprising at least one of: peak reducing transmission signal composition of multiplying a signal generated by the code sequence by a PAPR reducing signal, PRS, a specified number of times such that the PAPR or noise level of the signal corresponding to the code sequence is the specified value; or amplitude clipping of a signal such that a PAPR or noise level of a signal corresponding to the code sequence is a specified value and compensating a distorted orthogonal signal of the clipped signal a specified number of times.

Other aspects, advantages, and salient features of the disclosure will become apparent to those skilled in the art from the following detailed description, which, taken in conjunction with the annexed drawings, discloses various embodiments of the present disclosure.

## BRIEF DESCRIPTION OF THE DRAWINGS

The above and other aspects, features, and advantages of certain embodiments of the present disclosure will be more apparent from the following description taken in conjunction with the accompanying drawings, in which:

FIG. 1 is a block diagram illustrating a configuration of an electronic device in a network environment according to various embodiments of the present disclosure;
FIG. 2 is a block diagram illustrating configurations of a sensor operation module and a sensor panel according to various embodiments of the present disclosure;
FIG. 3 illustrates a process of assigning a driving signal according to various embodiments of the present disclosure;
FIG. 4 illustrates a process of generating a time-domain driving signal according to various embodiments of the present disclosure;
FIG. 5 illustrates a peak to average power ratio (PAPR) according to various embodiments of the present disclosure;
FIG. 6 illustrates a process of performing clipping according to various embodiments of the present disclosure;

FIG. 7 illustrates a process of performing peak reducing transmission signal composition according to various embodiments of the present disclosure;

FIG. 8 illustrates a process of compensating a distorted orthogonal signal according to various embodiments of the present disclosure;

FIG. 9A illustrates a change of a signal according to an application of clipping and peak reducing transmission signal composition according to various embodiments of the present disclosure;

FIG. 9B illustrates a process of processing optimum transformation of a driving signal according to various embodiments of the present disclosure;

FIG. 10 illustrates a process of processing a receive (Rx) signal according to various embodiments of the present disclosure;

FIG. 11 illustrates a process of performing discrete cosine transform (DCT) of an Rx signal according to various embodiments of the present disclosure;

FIG. 12 is a block diagram illustrating a configuration of an electronic device which may perform selective operation of a carrier according to various embodiments of the present disclosure;

FIG. 13 is a block diagram illustrating a configuration of an electronic device which includes a transmission (Tx) module including a signal generating module and a digital to analog converter (DAC) according to various embodiments of the present disclosure;

FIG. 14 is a block diagram illustrating a configuration of an electronic device which operates a carrier according to various embodiments of the present disclosure;

FIG. 15 is a block diagram illustrating a configuration of an electronic device which includes a reference electrode according to various embodiments of the present disclosure;

FIG. 16 is a flowchart illustrating a method for operating a sensor panel according to various embodiments of the present disclosure;

FIG. 17 is a block diagram illustrating a configuration of an electronic device according to various embodiments of the present disclosure; and

FIG. 18 is a block diagram illustrating a configuration of a program module according to various embodiments of the present disclosure.

Throughout the drawings, it should be noted that like reference numbers are used to depict the same or similar elements, features, and structures.

DETAILED DESCRIPTION OF EMBODIMENTS OF THE PRESENT INVENTION

The following description with reference to the accompanying drawings is provided to assist in a comprehensive understanding of various embodiments of the present disclosure as defined by the claims. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

In various embodiment of the present disclosure, the expressions "have", "may have", "include" and "comprise", or "may include" and "may comprise" used herein indicate existence of corresponding features (e.g., elements, such as numeric values, functions, operations, components, and the like) but do not exclude presence of additional features.

In various embodiment of the present disclosure, the expressions "A or B", "at least one of A or/and B", or "one or more of A or/and B", and the like used herein may include any and all combinations of one or more of the associated listed items. For example, the term "A or B", "at least one of A and B", or "at least one of A or B" may refer to all of the case (1) where at least one A is included, the case (2) where at least one B is included, or the case (3) where both of at least one A and at least one B are included.

The expressions, such as "1st", "2nd", "first", or "second", and the like, used in various embodiments of the present disclosure may refer to various elements irrespective of the order and/or priority of the corresponding elements, but do not limit the corresponding elements. The expressions may be used to distinguish one element from another element. For instance, both "a first user device" and "a second user device" indicate different user devices from each other irrespective of the order and/or priority of the corresponding elements. For example, a first component may be referred to as a second component and vice versa without departing from the scope of the present disclosure.

It will be understood that when an element (e.g., a first element) is referred to as being "(operatively or communicatively) coupled with/to" or "connected to" another element (e.g., a second element), it can be directly coupled with/to or connected to the other element or an intervening element (e.g., a third element) may be present. In contrast, when an element (e.g., a first element) is referred to as being "directly coupled with/to" or "directly connected to" another element (e.g., a second element), it should be understood that there are no intervening element (e.g., a third element).

According to the situation, the expression "configured to" used herein may be used as, for example, the expression "suitable for", "having the capacity to", "designed to", "adapted to", "made to", or "capable of'. The term "configured to" should not mean only "specifically designed to" be performed by hardware. Instead, the expression "a device configured to" may mean that the device is "capable of' operating together with another device or other components. For example, a "processor configured to perform A, B, and C" may mean a dedicated processor (e.g., an embedded processor) for performing a corresponding operation or a generic-purpose processor (e.g., a central processing unit (CPU) or an application processor (AP)) which may perform corresponding operations by executing one or more software programs which are stored in a memory device.

It will be further understood that terms, which are defined in a dictionary and commonly used, should also be interpreted as is customary in the relevant related art and not in an idealized or overly formal detect unless expressly so defined herein in various embodiments of the present disclosure. In some cases, even if terms are terms which are defined in the specification, they may not be interpreted to exclude embodiments of the present disclosure.

Electronic devices according to various embodiments of the present disclosure may include at least one of, for example, smartphones, tablet personal computers (PCs), mobile phones, video telephones, electronic book readers, desktop PCs, laptop PCs, netbook computers, workstations, servers, personal digital assistants (PDAs), portable multimedia players (PMPs), moving picture experts group (MPEG-1 or MPEG-2) audio layer 3 (MP3) players, mobile medical devices, cameras, or wearable devices (e.g., smart glasses, head-mounted-devices (HMDs), an electronic apparel, electronic bracelets, electronic necklaces, electronic appcessories, electronic tattoos, smart mirrors, smart watches, and the like).

According to various embodiments of the present disclosure, the electronic devices may be smart home appliances. The smart home appliances may include at least one of, for example, televisions (TVs), digital versatile disc (DVD) players, audios, refrigerators, air conditioners, cleaners, ovens, microwave ovens, washing machines, air cleaners, set-top boxes, home automation control panels, security control panels, TV boxes (e.g., Samsung HomeSyncTM, Apple TVTM, or Google TVTM), game consoles (e.g., XboxTM and PlayStationTM), electronic dictionaries, electronic keys, camcorders, or electronic picture frames.

According to various embodiments of the present disclosure, the electronic devices may include at least one of various medical devices (e.g., various portable medical measurement devices (e.g., blood glucose meters, heart rate meters, blood pressure meters, thermometers, and the like), a magnetic resonance angiography (MRA), a magnetic resonance imaging (MRI), a computed tomography (CT), scanners, or ultrasonic devices, and the like), navigation devices, global positioning system (GPS) receivers, event data recorders (EDRs), flight data recorders (FDRs), vehicle infotainment devices, electronic equipment for vessels (e.g., navigation systems, gyrocompasses, and the like), avionics, security devices, head units for vehicles, industrial or home robots, automatic teller's machines (ATMs), points of sales (POSs), or internet of things (e.g., light bulbs, various sensors, electric or gas meters, sprinkler devices, fire alarms, thermostats, street lamps, toasters, exercise equipment, hot water tanks, heaters, boilers, and the like).

According to various embodiments of the present disclosure, the electronic devices may include at least one of parts of furniture or buildings/structures, electronic boards, electronic signature receiving devices, projectors, or various measuring instruments (e.g., water meters, electricity meters, gas meters, wave meters, and the like). The electronic devices according to various embodiments of the present disclosure may be one or more combinations of the abovementioned devices. The electronic devices according to various embodiments of the present disclosure may be flexible electronic devices.

Hereinafter, electronic devices according to various embodiments of the present disclosure will be described with reference to the accompanying drawings. The term "user" used herein may refer to a person who uses an electronic device or may refer to a device (e.g., an artificial electronic device) which uses an electronic device.

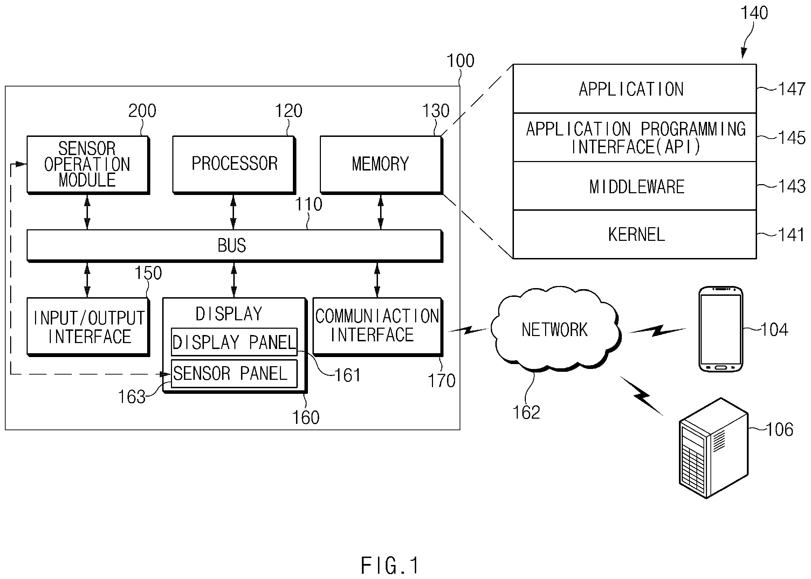

FIG. 1 is a block diagram illustrating a configuration of an electronic device in a network environment according to various embodiments of the present disclosure.

Referring to FIG. 1, an electronic device 100 in a network environment according to various embodiments of the present disclosure may be disclosed. The electronic device 100 may include a bus 110, a processor 120, a memory 130, an input and output interface 150, a display 160, a sensor operation module 200, or a communication interface 170. According to various embodiments of the present disclosure, at least one of the above elements may be omitted from the electronic device 100 or other elements may be added in the electronic device 100.

The above-mentioned electronic device 100 may include at least one sensor panel. For example, the display 160 may include a sensor panel 163. Alternatively, according to various embodiments of the present disclosure, the electronic device 100 may include at least one of a touch screen sensor, a fingerprint recognition sensor, or a pen recognition sensor. Each of the touch screen sensor, the fingerprint recognition sensor, and a pen recognition sensor may include a sensor panel. The electronic device 100 may apply a direct sequence spread spectrum (DSSS) scheme to a driving signal of the sensor operation module 200 which operates the sensor panel 163 in connection with improving a drive speed and sensitivity of the sensor panel 163. A receive (Rx) module of the sensor operation module 200 may apply a way of integrating charges to the driving signal of the sensor operation module 200. Since this electronic device 100 may perform substantial and simultaneous drive according to multi-channel transmission and multi-channel reception, although the sensor panel 163 is increased in size or the number of channels is increased, the electronic device 100 may easily support operation corresponding to a scan speed. In addition, the electronic device 100 may provide an effect of improving a scan speed when a report rate of a detection signal (or sensing signal) is fixed or increasing the number of nodes (e.g., electrode lines) which may be substantially and simultaneously processed. Therefore, the electronic device 100 may reduce a time required for data acquisition in the Rx module and may assign more time to signaling for improving signal quality. Therefore, the electronic device 100 may improve a signal to noise ratio (SNR) and sensitivity and accuracy of the sensor panel 163.

The electronic device 100 may use a multi-channel driving signal of a transmission (Tx) module of the sensor operation module 200 associated with driving the sensor panel 163 as a driving signal in which orthogonal frequency division multiplexing (OFDM) and/or code division multiplexing (CDM) are interchangeably used. The Rx module may classify and divide the multi-channel driving signal. This electronic device 100 may assign orthogonal codes to a sub-carrier having a plurality of different frequencies and may transmit the sub-carrier as a driving signal in a distributed manner. Therefore, although loss due to a noise occurs in a specific frequency band, the electronic device 100 may relatively reduce loss by which the entire signal is affected, thus improving noise suppression characteristics.

The electronic device 100 may operate a driving signal in a way of mixing a carrier with a baseband signal. Therefore, the electronic device 100 may use various drive frequencies associated with operating the sensor panel 163 and may operate various sensor panels (e.g., an indium tin oxide (ITO) of the related art, incell, a copper wire, a metal mesh, an Ag nanowire, and a fingerprint sensor). As described above, the electronic device 100 may provide a radio frequency (RF) carrier with a driving signal to the sensor panel 163 using a mixer to avoid a low frequency band (500 KHz or less) where various noises which flow in through a touch screen or a display panel 161, and the like, are concentrated. Therefore, the electronic device 100 may provide robustness to noises, improved sensitivity, and improved accuracy.

According to various embodiments of the present disclosure, the sensor operation module 200 of the electronic device 100 may be implemented to include a digital to analog converter (DAC) and a Tx driver in the Tx module associated with operating the sensor panel 163. The sensor operation module 200 may be implemented to include a low noise amplifier (LNA), a high pass filter (HPF), a low pass filter (LPF), a variable gain amplifier (VGA), an analog to digital converter (ADC), and the like in the Rx module associating with the sensor panel 163. The above-mentioned sensor operation module 200 may have a different hardware structure from a sensor operation module which uses charge transfer. For example the sensor operation module 200 may have a hardware structure which omits a switch capacitor circuit for charge transfer, a charge amplifier, and the like and adopts a DAC.

The bus 110 may include a circuit which connects the components 120 to 170 and 200 with each other and transmits communication (e.g., a control message and/or data) between the components. According to an embodiment of the present disclosure, the bus 110 may transmit an event, associated with activating the sensor operation module 200, which is generated by the input and output interface 150 to the processor 120 or the sensor operation module 200. The bus 110 may transmit a touch event, associated with the sensor panel 163, which is detected by the sensor operation module 200 to the processor 120. The bus 110 may transmit a touch event related control signal from the processor 120 to the memory 130, the communication interface 170, or the display 160, and the like.

The processor 120 may include one or more of a CPU, an AP, or a communication processor (CP). For example, the processor 120 may perform calculation or data processing about control and/or communication of at least another of the components of the electronic device 100. According to an embodiment of the present disclosure, the processor 120 may activate the display 160 in response to occurrence of an input event and may transmit a control signal, associated with controlling the sensor panel 163, to the sensor operation module 200. The processor 120 may receive a touch event of the sensor panel 163 from the sensor operation module 200 and may perform signaling corresponding to a kind of the touch event. For example, the processor 120 may output a home screen on the display 160 in response to a kind of the touch event or may establish a communication channel with an external electronic device 104. Alternatively, the processor 120 may change an operation mode of the sensor panel 163 in response to a kind of the touch event.

According to an embodiment of the present disclosure, the processor 120 may adjust the number of channels of a driving signal associated with operating the sensor panel 163 or the number of Rx channels of the Rx module associated with operating the sensor panel 163, according to a kind or characteristic of a screen output on the display 160. For example, the processor 120 may adjust the number of channels with reference to setting information stored in the memory 130 according to a size of a detection area, which should be detected by the sensor panel 163, and the number of classified detection areas. According to an embodiment of the present disclosure, the processor 120 may determine whether the sensor panel 163 applies a carrier according to an operation state of hardware, which operates according to a communication state of the electronic device 100 or a signal of a specified frequency band, and setting information stored in the memory 130.

The memory 130 may include a volatile and/or non-volatile memory. The memory 130 may store, for example, instructions or data associated with at least another of the components of the electronic device 100. For example, the memory 130 may store signal information associated with operating the sensor panel 163.

The signal information may be generated according to code information (or a code sequence) generated by interchangeably using OFDM and CDM. In addition, the signal information may be information in which clipping and peak reducing transmission signal composition are applied to the code information. According to various embodiments of the present disclosure, when a hardware module which generates the signal information is included in the sensor operation module 200, the signal information may not be stored in the memory 130 and may be generated and provided in real time upon operating the sensor panel 163.

According to various embodiments of the present disclosure, the memory 130 may store setting information about an operation mode of the sensor panel 163. The setting information may include information about the number of Tx channels which provide a driving signal of the sensor panel 163, information about the number of Rx channels, impedance information according to combination of the Tx and Rx channels, and delay time information. In addition, the setting information may include setting information about mixer operation, setting information about mixer non-use, and the like.

According to various embodiments of the present disclosure, the memory 130 may software and/or a program 140. The program 140 may include, for example, a kernel 141, a middleware 143, an application programming interface (API) 145, and/or an application program (or an "application") 147. At least a part of the kernel 141, the middleware 143, or the API 145 may be referred to as an operating system (OS).

The kernel 141 may control or manage, for example, system resources (e.g., the bus 110, the processor 120, the memory 130, or the sensor operation module 200, and the like) used to execute an operation or function implemented in the other programs (e.g., the middleware 143, the API 145, or the application program 147). In addition, the kernel 141 may provide an interface which may control or manage system resources by accessing a separate component of the electronic device 100 in the middleware 143, the API 145, or the application program 147. According to various embodiments of the present disclosure, the kernel 141 may provide an interface necessary for controlling and managing the sensor panel 163. In addition, the kernel 141 may provide an interface and the like necessary for processing and operating an Rx signal (or a sensor signal) obtained according to the sensor panel 163.

The middleware 143 may play a role as, for example, a go-between such that the API 145 or the application program 147 communicates with the kernel 141 and transmits and receives data. In addition, the middleware 143 may process one or more work requests received from the application program 147 according to priority. For example, the middleware 143 may provide priority which may use system resources (the bus 110, the processor 120, or the memory 130, and the like) of the electronic device 100 to at least one of the application program 147. For example, the middleware 143 may perform scheduling or load balancing for the one or more work requests by processing the one or more work requests according to the priority provided to the at least one of the application program 147. According to an embodiment of the present disclosure, the middleware 143 may carry out work of obtaining signal information (e.g., a code sequence in which OFDM and CDM are interchangeably used and signal information in which clipping and peak reducing transmission signal composition are applied to a signal generated by a code sequence) to be provided to the sensor panel 163, from the memory 130 or generating the signal information and may carry out work of providing a driving signal corresponding to the signal information to the sensor panel 163 and processing an Rx signal obtained in response to the driving signal.

The API 145 may be, for example, an interface in which the application program 147 controls a function provided from the kernel 141 or the middleware 143. For example, the API 145 may include at least one interface or function (e.g., an instruction) for data control, sensor operation control, image processing, or image or sensor data processing, and the like. According to various embodiments of the present disclosure, the API 145 may include an API having an interface or function necessary for window control, sensor channel control, sensor scan control, and the like which are associated with operating the sensor panel 163, a control API associated with generating signal information, a control API associated with storing and providing signal information, and the like. In addition, the API 145 may include an API associated with processing an Rx signal obtained by the sensor panel 163.

The input and output interface 150 may play a role as, for example, an interface which may transmit instructions or data input from a user or another external device to another component (or other components) of the electronic device 100. In addition, input and output interface 150 may output instructions or data received from another component (or other components) of the electronic device 100 to the user or the other external device. According to an embodiment of the present disclosure, the input and output interface 150 may generate an input signal associated with activating the sensor panel 163 or a user input associated with inactivating the sensor panel 163, and the like in response to a user input. According to various embodiments of the present disclosure, the input and output interface 150 may generate an input signal associated with a change of an operation mode of the sensor panel 163 (e.g., a change of the number of Tx channels which provide a driving signal or a change of a channel type, an application change of a carrier upon providing a driving signal, and the like).

The display 160 may include, for example, a liquid crystal display (LCD), a light emitting diode (LED) display, an organic LED (OLED) display, a microelectromechanical systems (MEMS) display, an electronic paper display, or a flexible display. The display 160 may display, for example, various contents (e.g., text, images, videos, icons, or symbols, and the like) to the user. The display 160 may include a touch screen, and may receive, for example, touch, gesture, proximity, or a hovering input using an electronic pen or a part of a body of the user.

According to various embodiments of the present disclosure, the display 160 may include the display panel 161 and the sensor panel 163. The display panel 161 may be an area on which images or text, and the like are displayed. The sensor panel 163 may be disposed on at least one of an upper portion or a lower portion of the display panel 161. The sensor panel 163 may include electrodes disposed in the form of a matrix. The sensor panel 163 may be disposed as a matrix type on the entire area of the display panel 161. The display panel 161 may have a transparent shape to be seen from the outside. According to various embodiments of the present disclosure, the sensor panel 163 may include grids (e.g., a structure in which a plurality of pixels are included in a grid of a panel) of a size which corresponds to or is less than the number of pixels of the display panel 161. The grids of the sensor panel 163 may be driven and detected, for example, every certain groups according to channel setup or a channel change. The sensor panel 163 may receive a driving signal generated by the sensor operation module 200. When a specified object is adjacent to a certain point of the sensor panel 163 while the driving signal is provided, there may be a change in an electric field formed according to the corresponding driving signal. The change in the electric field may be transmitted, as an Rx signal of the sensor panel 163, to the sensor operation module 200.

The communication interface 170 may establish communication between, for example, the electronic device 100 and an external device (e.g., the external electronic device 104 or a server device 106). For example, the communication interface 170 may connect to a network 162 through wireless communication or wired communication and may communicate with the external device (e.g., the external electronic device 104 or the server device 106).

The wireless communication may use, for example, at least one of long term evolution (LTE), LTE-advanced (LTE-A), CDMA, wideband CDMA (WCDMA), universal mobile telecommunications system (UMTS), wireless broadband (WiBro), or global system for mobile communications (GSM), and the like as a cellular communication protocol. In addition, the wireless communication may include, for example, local-area communication. The local-area communication may include, for example, at least one of wireless-fidelity (Wi-Fi) communication, Bluetooth (BT) communication, near field communication (NFC), or GPS communication, and the like. The wired communication may include at least one of, for example, a universal serial bus (USB), a high definition multimedia interface (HDMI), a recommended standard 232 (RS-232), or a plain old telephone service (POTS), and the like. The network 162 may include a telecommunications network, for example, at least one of a computer network (e.g., a local area network (LAN) or a wide area network (WAN)), the Internet, a telephone network, and the like.

According to various embodiments of the present disclosure, the communication interface 170 may operate a signal of a specified frequency band in connection with supporting a communication service. Therefore, the sensor operation module 200 may use a signal of a frequency band, which avoids a frequency band which resonates with a frequency operated in the communication interface 170, as a driving signal.

The external electronic device 104 which may communicate with the electronic device 100 through the communication interface 170 may be the same or different device as or from the electronic device 100. The server device 106 may include a group of one or more servers. According to various embodiments of the present disclosure, all or some of operations executed in the electronic device 100 may be executed in another electronic device or a plurality of electronic devices (e.g., the external electronic device 104 or the server device 106). According to an embodiment of the present disclosure, when the electronic device 100 should perform any function or service automatically or according to a request, the electronic device 100 may request another device (e.g., the external electronic device 104 or the server device 106) to perform at least a part of the function or service, rather than executing the function or service for itself or in addition to the function or service. The other electronic device (e.g., the external electronic device 104 or the server device 106) may execute the requested function or the added function and may transmit the result of the execution to the electronic device 100. The electronic device 100 may process the received result without change or additionally and may provide the requested function or service. For this purpose, for example, cloud computing technologies, distributed computing technologies, or client-server computing technologies may be used.

The sensor operation module 200 may obtain and provide a driving signal for multi-channel simultaneous drive or multi-channel detection of the sensor panel 163. For example, the sensor operation module 200 may obtain a driving signal according to signal information stored in the memory 130 and may provide the obtained driving signal to the sensor panel 163. Alternatively, the sensor operation module 200 may generate a driving signal and may provide the generated driving signal to the sensor panel 163. The driving signal used in the sensor operation module 200 may be a signal in which orthogonal codes are distributed and allocated to sub-carriers configured with a plurality of frequencies which have orthogonality with each other. For example, the above-mentioned driving signal may be generated by generating a multi-carrier CDM signal. A unique orthogonal code assigned to each channel of the sensor panel 163 may be a Hadamard code, a gold code, a Kasami code, a pseudo noise (PN) code, and the like. The driving signal may be generated by performing inverse discrete cosine transform (IDCT) of a unique orthogonal code allocated to each channel. To reduce a peak to average power ratio (PAPR) of the signal generated by IDCT, the sensor operation module 200 may apply a clipping & peak reducing transmission signal composition method. The generated driving signal may be repeatedly reused as a unique signal assigned to each channel without repeated calculation.

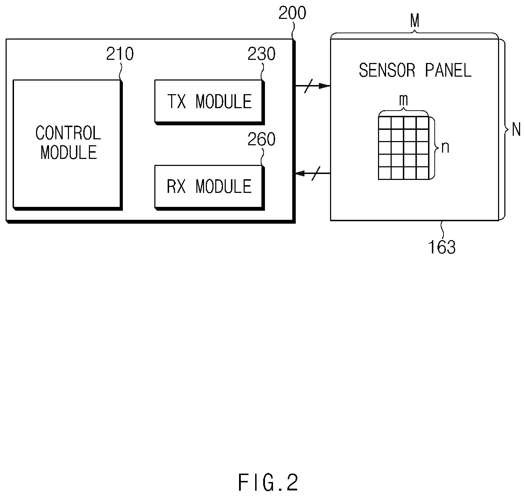

FIG. 2 is a block diagram illustrating configurations of a sensor operation module and a sensor panel according to various embodiments of the present disclosure.

Referring to FIG. 2, a sensor panel 163 may be disposed in the form of a matrix of a plurality of electrodes (e.g., transparent electrodes). For example, the sensor panel 163 may include M columns (e.g., Tx channels or a plurality of Tx electrode lines) and N rows (e.g., Rx channels or a plurality of Rx electrode lines). According to an embodiment of the present disclosure, the sensor panel 163 may be driven by a unit channel of m ($\leq$M) columns and n ($\leq$N) rows. Alternatively, the sensor panel 163 may operate m$\times$n electrode lines among M $\times$N electrode lines under control of the a sensor operation module 200.

The sensor operation module 200 may include, for example, a control module 210, a Tx module 230, and an Rx module 260.

According to an embodiment of the present disclosure, the control module 210 may provide a driving signal (e.g., a Tx signal or a Tx channel signal) to the Tx module 230 and may receive and estimate (or analyze) an Rx signal of the Rx module 260. For example, the control module 210 may control the Tx module 230 to provide a driving signal, corresponding to code information in which OFDM and CDM are interchangeably used, to the sensor panel 163. According to various embodiments of the present disclosure, the control module 210 may provide signal information (e.g., signal information to which clipping and peak reducing transmission signal composition are applied), in which signal characteristics of code information in which OFDM and CDM are interchangeably used are improved, to the Tx module 230 to provide a driving signal corresponding to the corresponding signal information to the sensor panel 163. The control module 210 may provide a carrier of a specified frequency band with the driving signal corresponding to the code information or the signal information to the sensor panel 163 in the process of providing the driving signal.

The control module 210 may generate the code information or the signal information, associated with providing the driving signal, in real time and may provide the generated code information or signal information to the Tx module 230. Alternatively, the control module 210 may obtain the code information or signal information corresponding to the driving signal from a memory 130 of FIG. 1 and may provide the obtained code information or signal information to the Tx module 230. For example, code information or signal information stored in the memory 130 may be previously generated and stored by the control module 210 or may be received and stored from an external electronic device or a server device, and the like.

According to various embodiments of the present disclosure, the control module 210 may determine, for example, the number and a kind of driving signals to be provided to the sensor panel 163 in response to setting information. The control module 210 may control a channel selection switch (not shown) to provide the determined driving signal to a specified area of a specified channel of the sensor panel 163.

The control module 210 may perform channel estimation for a signal received from the sensor panel 163 by the Rx module 260. The control module 210 may determine whether a touch is adjacent to any point or any area of the sensor panel 163 according to the result of performing the channel estimation. The control module 210 may generate a touch event corresponding to the determined result, and may provide the touch event to a processor 120 of FIG. 1 or may apply the touch event to a currently executing application. The control module 210 may substantially and simultaneously detect a certain area of the sensor panel 163 according to setting information. In this regard, the control module 210 may control a channel selection switch, associated with detecting the certain area of the sensor panel 163, in response to setting information. The control module 210 may synchronize the Tx module 230 with the Rx module 260. For example, the control module 210 may provide a driving signal and a carrier included in the driving signal, and the like in the Tx module 230 to the Rx module 260 to detect an Rx signal.

The Tx module 230 may generate a driving signal corresponding to code information or signal information provided from the control module 210. The Tx module 230 may provide the generated driving signal to the sensor panel 163. The Tx module 230 may generate a plurality of driving signals corresponding to a plurality of code information or a plurality of signal information under control of the control module 210. The Tx module 230 may substantially and simultaneously provide the plurality of generated driving signals to certain areas (e.g., channels) of the sensor panel 163 according to a setting (e.g., a setting according to setting information or a setting corresponding to a user input) by a channel selection switch (not shown). For example, the Tx module 230 may substantially and simultaneously provide different driving signals to a plurality of areas (e.g., channels) of the sensor panel 163.

The Tx module 230 may generate an analog signal corresponding to code information or sensor information and may provide the generated analog signal to the sensor panel 163. Alternatively, the Tx module 230 may provide a carrier of a specified frequency band with an analog signal corresponding to code information or sensor information to the sensor panel 163.

The Rx module 260 may detect at least a part (e.g., a specified Rx channel) of an area of the sensor panel 163 and may detect an Rx signal. In this operation, the Rx module 260 may detect an Rx signal from a partial area of the sensor panel 163 or from every partial area (or from every channel) according to a channel selection switch (not shown) connected to the sensor panel 163. The Rx module 260 may amplify and filter the detected Rx signal, may convert the filtered signal into a digital signal, and may provide the converted digital signal to the control module 210. In this operation, when detecting an Rx signal corresponding to a driving signal provided on a carrier, the Rx module 260 may multiply the corresponding Rx signal by the carrier to detect a signal.

According to various embodiments of the present disclosure, the sensor operation module 200 may substantially and simultaneously drive, for example, several driving signals by operating a unique code assigned to each driving signal and restoring a source of a signal in the Rx module 260. For example, when the Tx module 230 has m channels and when the Rx module 260 has n channels, the sensor operation module 200 may substantially and simultaneously scan $m \times n$ nodes by multi-channel simultaneous drive and multi-channel simultaneous detection, thus improving a scan speed.

As described above, according to various embodiments of the present disclosure, the sensor operation module 200 may include, for example, a DAC, a Tx driver, a Tx mixer, a LNA, an Rx mixer, a VGA, an ADC, and a channel estimator. The sensor operation module 200 may include the DAC in the Tx module 230 to use any waveform as a driving signal. Since a driving signal operated by the above-mentioned sensor operation module 200 has a shape in which a plurality of sub-carriers are overlapped with each other, the sensor operation module 200 may be configured with a PAPR of a specified value or more (e.g., 1.5 or more, or 2 or more). The sensor operation module 200 may further include a mixer which mixes a driving signal with a carrier of 500 KHz or more. The sensor operation module 200 may perform high pass filtering of an Rx signal through a HPF in the Rx module 260 before performing a mixing operation using the mixer to remove noise components which flow in the sensor panel 163. The Rx module 260 of the sensor operation module 200 may remove a carrier wave of a driving signal using the mixer to recover a baseband signal and perform channel estimation. The sensor operation module 200 may dynamically change a frequency of a carrier wave used in the Tx module 230 to avoid noise components of a specific frequency domain. For example, the sensor operation module 200 may verify drive frequencies of other hardware scheduled to overlap with the process of operating the sensor panel 163 and may dynamically change a frequency band of a carrier wave not to overlap with a corresponding drive frequency band.

The sensor operation module 200 may generate a driving signal through the sum of sub-carriers configured with a plurality of orthogonal frequencies. The sensor operation module 200 may assign orthogonal code bits (chips) in a frequency domain to each sub-carrier configured with an orthogonal frequency. The sensor operation module 200 may assign orthogonal code bits (chips) in a time domain to each sub-carrier configured with an orthogonal frequency.

As described above, according to various embodiments of the present disclosure, the sensor operation module 200 may use, for example, code information (or a code sequence), in which OFDM and CDM are interchangeably used, as a driving signal of the sensor panel 163. For example, the sensor operation module 200 may generate a driving signal using OFDM and CDM in real time. The sensor operation module 200 previously generates a driving signal using OFDM and CDM and may store the generated driving signal, thus reusing the stored driving signal.

For example, the sensor operation module 200 may generate the last Tx module driving signal by assigning a code to a signal having orthogonal frequency components and performing a process of reducing a PAPR. According to an embodiment of the present disclosure, the sensor operation module 200 may perform, for example, clipping & peak reducing transmission signal composition to reduce a PAPR of a driving signal.

As described above, the sensor operation module 200 may perform a method of clipping a portion having high amplitude of a signal in connection with generating the last driving signal. The sensor operation module 200 may convert the clipped signal into a signal of a frequency domain and may restore amplitude of an orthogonal code in the frequency domain to an original value. The sensor operation module 200 may convert the signal to which the amplitude of the clipped signal of the frequency domain is restored into a signal of a time domain and may repeatedly perform the method of clipping the portion having the high amplitude a specified number of times or until the time that a specified result is drawn.

The Rx module 260 of the sensor operation module 200 may perform discrete cosine transform (DCT) or fast Fourier transform (FFT) for separating a signal from an Rx signal and may convert the time domain into a frequency domain. The sensor operation module 200 may perform matched filtering or least square (LS) channel estimation for analyzing the separated signal. In this operation, the sensor operation module 200 may perform LS estimation or minimum mean square error (MMSE) estimation in connection with channel estimation of a signal converted into the frequency domain.

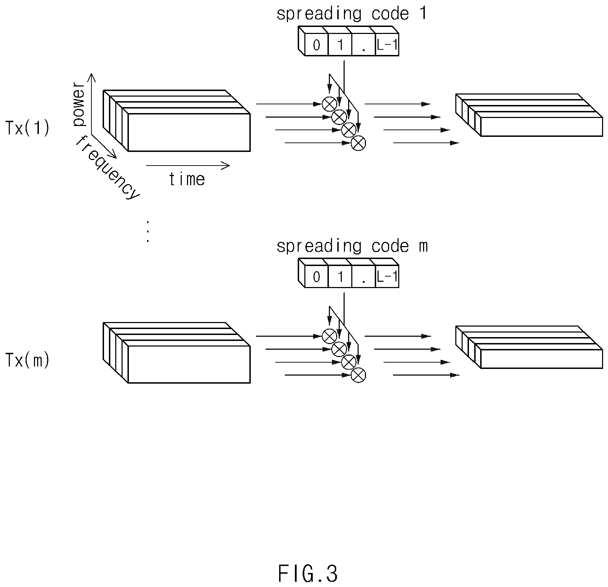

FIG. 3 illustrates a process of assigning a driving signal according to various embodiments of the present disclosure.

Referring to FIG. 3, according to various embodiments of the present disclosure, a sensor operation module 200 of FIG. 2 may generate a driving signal of a multi-carrier code division assignment scheme. For example, the sensor operation module 200 may assign frequency components, configured with a plurality of sub-carriers, to respective Tx channels. Each of the plurality of sub-carriers may have orthogonal frequency properties. In this regard, the sensor operation module 200 may include a signal generation module which generates a plurality of orthogonal sub-carriers to be supplied to respective Tx channels. The sensor operation module 200 may assign the plurality of orthogonal sub-carriers to a plurality of Tx channels, for example, Tx channels Tx(1) to Tx(m).

According to various embodiments of the present disclosure, the sensor operation module 200 may assign, for example, an orthogonal code to each Tx channel. For example, the sensor operation module 200 may assign orthogonal codes to orthogonal sub-carriers assigned for each Tx channel. Referring to FIG. 3, the sensor operation module 200 may generate a plurality of orthogonal sub-carriers in connection with a Tx channel Tx (1) and may assign a specified orthogonal code (e.g., a spreading code 1) to the plurality of orthogonal sub-carriers. The sensor operation module 200 may include a signal generation module which may generate and assign orthogonal sub-carriers and may generate, assign, and mix orthogonal codes. Alternatively, the sensor operation module 200 may obtain code information from a memory 130 of FIG.1, which store code information (or a code sequence) in which orthogonal codes are assigned to a plurality of sub-carriers.

According to an embodiment of the present disclosure, the Rx module 260 of the sensor operation module 200 may classify, for example, a driving signal for each channel using orthogonal sub-carriers to which orthogonal codes are assigned. In this regard, the sensor operation module 200 may multiply a plurality of orthogonal sub-carriers assigned for each Tx channel by each of chips (e.g., bits) of orthogonal code sequences. In this case, the number of the chips of the code sequences may be identical to the number of sub-carriers.

When a driving signal generated by multiplying the orthogonal sub-carriers by orthogonal codes is received in the Rx module 260 through the sensor panel 163, a condition of the sensor panel 163, for example, channel or signal attenuation corresponding to a touch of a conductor may occur. The method of multiplexing the plurality of orthogonal sub-carriers by the code sequences may be performed to a plurality of Tx channels, for example, the Tx channels Tx (1) to Tx (m). For example, the sensor operation module 200 may assign a plurality of orthogonal sub-carriers in connection with the Tx channel Tx (m) and may multiply each orthogonal sub-carrier by an orthogonal code sequence to generate a driving signal.

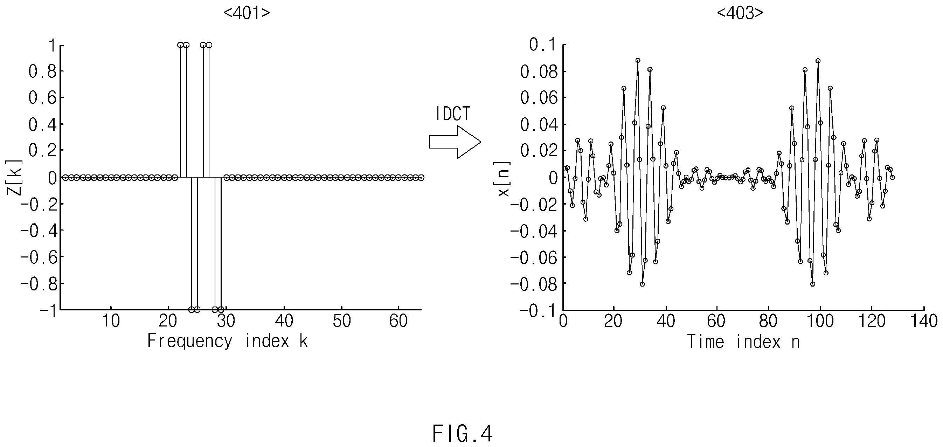

FIG. 4 illustrates a process of generating a time domain driving signal according to various embodiments of the present disclosure.

Referring to FIG. 4, a sensor operation module 200 of FIG. 2 may provide driving signals, in which orthogonal sub-carriers are multiplied by unique codes, to a sensor panel 163 of FIG. 2. In this operation, the sensor operation module 200 may process each driving signal as a signal which may be optimized in operating the sensor panel 163. In this regard, values in a frequency domain of a specific driving signal operated by the sensor operation module 200 may be shown in graph 401. A driving signal shown in graph 401 may be, for example, a signal value corresponding to an orthogonal code [1 1 -1 -1 1 1 -1 -1] in the frequency domain. The sensor operation module 200 may perform IDCT, defined in Equation 1, with respect to the signal value corresponding to the orthogonal code and may generate a driving signal of a time domain from the orthogonal code of the frequency domain.

$$IDCT : x[n] = \frac{1}{N}\sum_{k=1}^{M} 2Z[k]\cos\left[\frac{2\pi}{N}kn\right] \qquad \dots \text{ Equation 1}$$

Herein, x[n] may be a signal of a time domain of $1{\leq}n{\leq}N$, and Z[k] may be a signal of a frequency domain (positive area) of $1{\leq}k{\leq}M= N/2$. The result of the time domain, in which IDCT of the above-mentioned orthogonal code [1 1 -1 -1 1 1 -1 -1] is performed, may be shown in graph 403. A signal value shown in graph 403 may correspond to a value in which each sub-carrier is multiplied by each code sequence

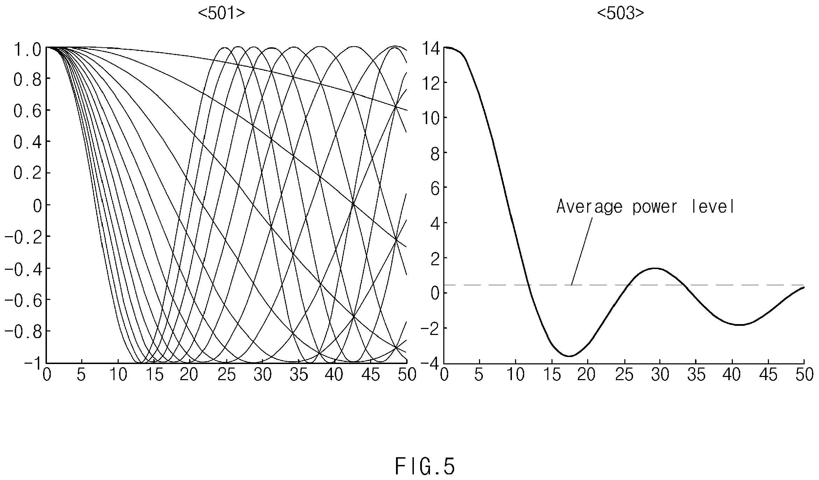

FIG. 5 illustrates a PAPR according to various embodiments of the present disclosure.

Referring to FIG. 5, according to various embodiments of the present disclosure, when using a plurality of orthogonal frequency components to generate a driving signal of each Tx channel, there is a high PAPR. For example, when 14 orthogonal frequencies are substantially and simultaneously used (e.g., when signals are overlapped with each other) in graph 501, there may be an amplitude value in which maximum values of the 14 orthogonal frequency components are added in graph 503. As a result, when the 14 orthogonal frequency signals simultaneously operate, a PAPR may be 14. In various electronic devices, when a PAPR is higher, a dynamic range of a DAC or ADC becomes more and more increased. Therefore, there may be a need for signaling for covering the increased dynamic range or a hardware configuration corresponding to the increased dynamic range.

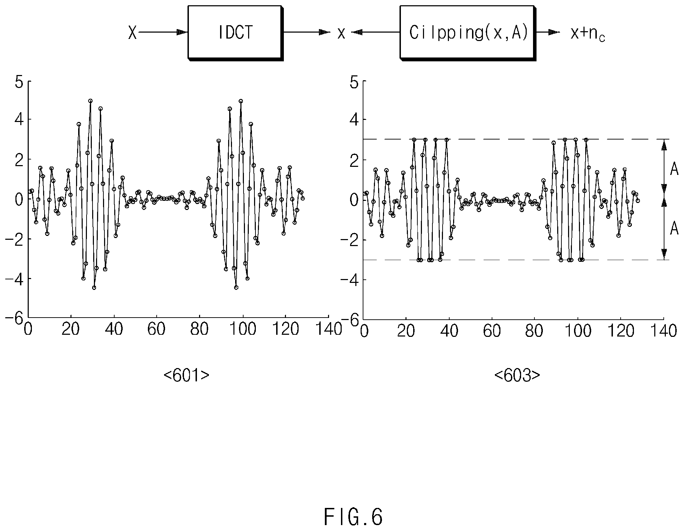

FIG. 6 illustrates a process of performing clipping according to various embodiments of the present disclosure.

Referring to FIG. 6, in connection with reducing a PAPR described with reference to FIG. 5, a sensor operation module 200 of FIG. 2 may perform clipping. In connection with the clipping, the sensor operation module 200 may clip a portion where amplitude of a time domain signal is an A value or more. The A value may be defined by a target PAPR value (e.g., a dynamic range for an input and output of an ADC or DAC). A PAPR which may be optimized according to characteristics of a sensor panel 163 of FIG. 2 may be changed. Therefore, the A value may be statistically or experimentally adjusted relative to a targeted PAPR value according to the characteristics of the sensor panel 163.

As described above, the sensor operation module 200 may clip a signal in which IDCT of a signal generated by overlaps of a plurality of sub-carriers described with reference to FIG. 4 or 5 is performed. For example, as shown in graph 601, the sensor operation module 200 may perform IDCT of a signal X corresponding to an orthogonal code of a frequency domain to convert the frequency domain into a time domain and to obtain a signal x. As shown in graph 603, the sensor operation module 200 may clip the signal x of the time domain (e.g., may adjust maximum amplitude of the signal x by using an amplitude A as a cut line) to obtain a signal x+nc. Herein, nc may be a noise signal generated according to clipping. As described above, in connection with the clipping, when clipping is applied to correspond to a PAPR value targeted on a signal of a time domain, a noise level of the corresponding signal may be increased.

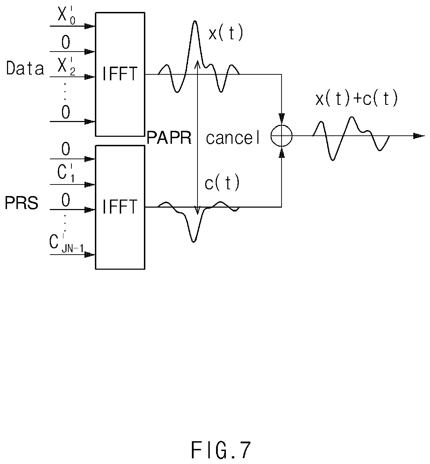

FIG. 7 illustrates a process of performing peak reducing transmission signal composition according to various embodiments of the present disclosure.

Referring to FIG. 7, in a process of applying at least one orthogonal sub-carrier to a driving signal, a sensor operation module 200 of FIG. 2 may prepare a driving signal before being applied to the at least one sub-carrier (or may previously generate and store a driving signal). Alternatively, the sensor operation module 200 may generate at least one sub-carrier, may store the generated sub-carrier in a memory 130 of FIG. 1, and may operate the sub-carrier stored in the memory 130. Therefore, the sensor operation module 200 may know whether to use any sub-carrier for a sensor panel 163 of FIG. 2. Therefore, the sensor operation module 200 may know characteristics of sub-carriers, for example, a PAPR which is generated by the sub-carriers.

The sensor operation module 200 may support peak reducing transmission signal composition which provides carriers configured to reduce a PAPR of sub-carriers with known PAPR characteristics. For example, as shown in FIG. 7, data corresponding to a plurality of sub-carriers may be processed by an inverse FFT (IFFT) module to be output as a signal x(t) of a time domain. The sensor operation module 200 may calculate a signal c(t) which may reduce at least a part of a PAPR of the signal x(t) corresponding to the data and may generate a PAPR reducing signal (PRS) by performing FFT of the c(t). The sensor operation module 200 may store the PRS in the memory 130, or may obtain PRS at the time that sub-carriers are prepared to use the PRS to reduce a PAPR. For example, the sensor operation module 200 may process PRS stored in the memory 130 by an IFFT module to generate a signal c(t) of a time domain and may mix the generated signal c(t) with the signal x(t) to output a signal x(t)+c(t) in which a PAPR is reduced.

In this regard, when sub-carriers are determined as a driving signal, the sensor operation module 200 may verify PRSs corresponding to sub-carriers and may detect a value suitable for PRSs which may reduce (or cancel) a high PAPR of the sub-carriers.

According to various embodiments of the present disclosure, the sensor operation module 200 may repeatedly perform, for example, clipping and peak reducing transmission signal composition to obtain signal information to be used as a driving signal. For example, the sensor operation module 200 may design a signal to have a minimum peak-to-average desired signal power ratio (PADPR) value. When considering a PAPR value other than a clipping noise power, the sensor operation module 200 may design a signal to have a minimum peak power of the signal. The above-mentioned operation may consider detecting a change by a touch object without transmitting data having a specific meaning by a driving signal applied to the sensor panel 163. The sensor operation module 200 may previously perform an algorithm for reducing a PAPR, may determine an optimum driving signal, and may store a driving signal sequence in the memory 130 to reuse the driving signal sequence.

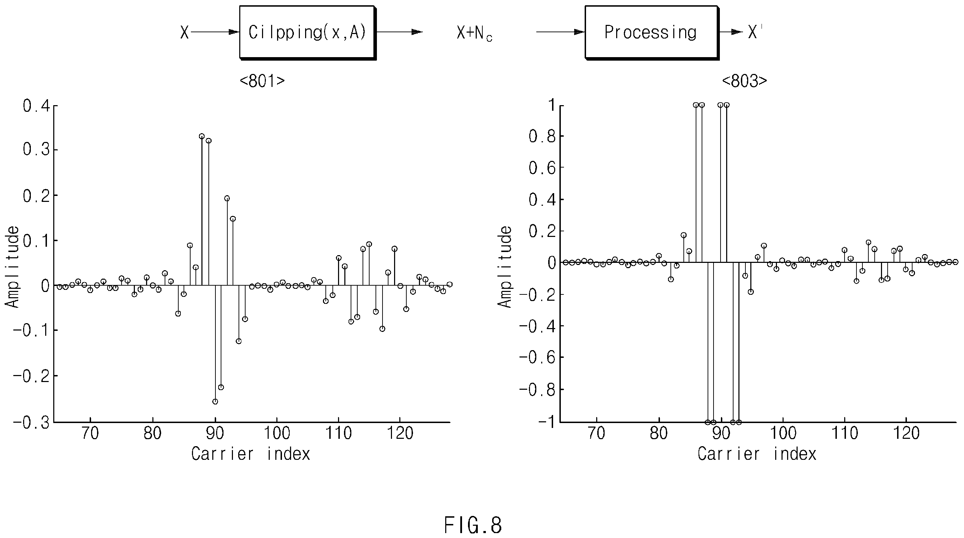

FIG. 8 illustrates a process of compensating a distorted orthogonal signal according to various embodiments of the present disclosure.

Referring to FIG. 8, a sensor operation module 200 of FIG. 2 may apply processing of a specified way to a signal X+NC generated by clipping a sub-carrier signal X to convert the sub-carrier signal X into a new signal X'. For example, the sensor operation module 200 may apply clipping and peak reducing transmission signal composition to the sub-carrier signal X to obtain the signal X+NC shown in graph 801. When seeing the obtained signal X+NC, it may be known that signals to be verified by peripheral noises are distorted (e.g., signals are attenuated). Therefore, the sensor operation module 200 may apply an original orthogonal signal to a distorted orthogonal signal (e.g., may apply the processing of the specified way to the distorted orthogonal signal) to generate the new signal X' as shown in graph 803. According to an embodiment of the present disclosure, the new signal X' may be, for example, a signal of relatively more attenuating peripheral noises than a signal value and emphasizing (e.g., amplifying) a sub-carrier area where the signal value is preset.

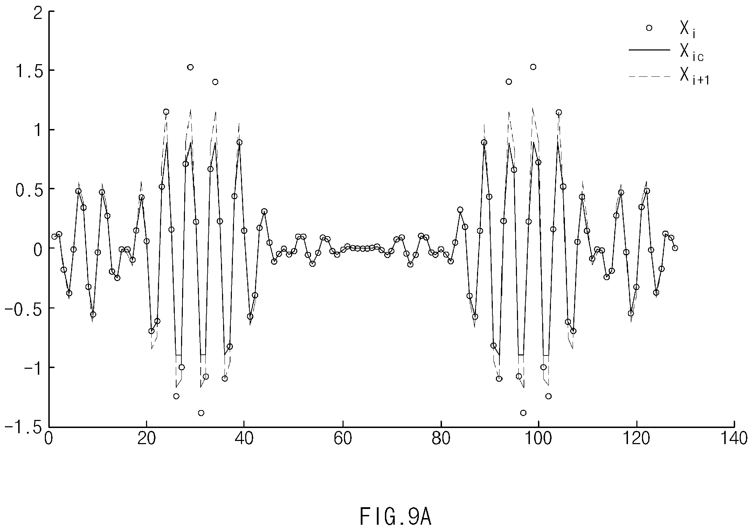

FIG. 9A illustrates a change of a signal according to an application of clipping and peak reducing transmission signal composition according to various embodiments of the present disclosure.

Referring to FIG. 9A, a time-domain signal Xi before clipping may be expressed by a time-domain signal Xic through clipping by a sensor operation module 200 of FIG. 2. In addition, the time-domain signal Xi before clipping may be expressed by a time-domain signal Xi+1 through clipping and processing by the sensor operation module 200. As shown in FIG. 9A, a data portion having a maximum value may be reduced. Therefore, it may be known that a PAPR may also be reduced.

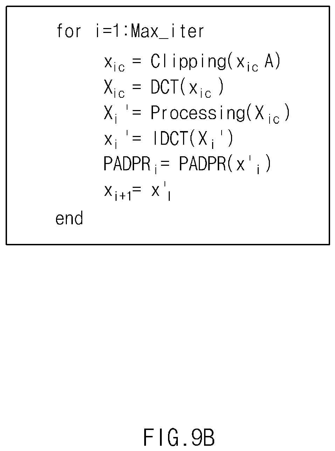

FIG. 9B illustrates a process of processing optimum transformation of a driving signal according to various embodiments of the present disclosure.

Referring to FIG. 9B, a clipping operation and a processing operation which are described with reference to FIG. 9A may repeatedly operate until a signal in which has a PAPR of a targeted value and has a noise of a specified value or less is obtained. In this regard, as shown in FIG. 9B, a sensor operation module 200 of FIG. 2 may repeatedly operate a clipping operation for a signal Xic, a DCT operation, a processing operation of the DCT signal, an IDCT operation of the processed signal, an operation of storing a PADPR value of the IDCT signal, and an operation for storing a new signal a specified number of times (Max_iter). The specified number of times may be a value which is statistically or experimentally obtained. For example, the sensor operation module 200 may detect values of a specified number of times (or certain range values), in which a PAPR maintains a targeted value (or a targeted range value) and a noise level is reduced with a specified value or less, by clipping and processing various sub-carriers. According to an embodiment of the present disclosure, the sensor operation module 200 may apply, for example, an average value of the number of times for various sub-carriers to specific sub-carriers or may apply a maximum value among all detection values to specific sub-carriers, according to a specified policy.

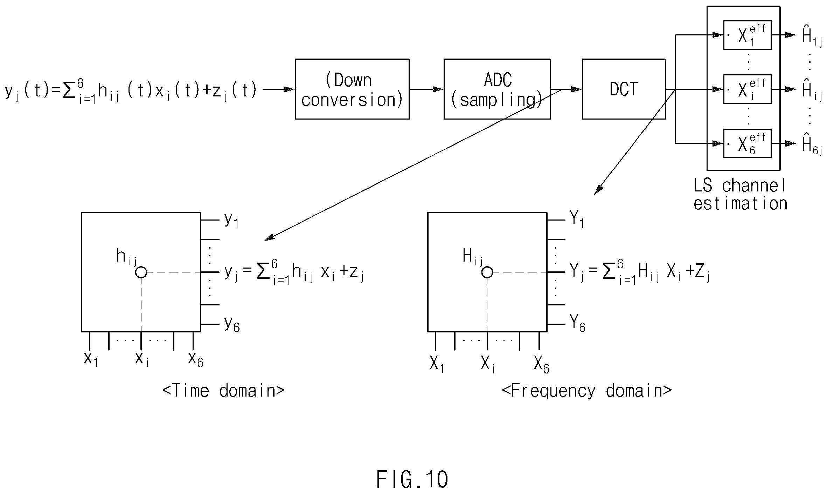

FIG. 10 illustrates a process of processing an Rx signal according to various embodiments of the present disclosure.

Referring to FIG. 10, an Rx module 260 of a sensor operation module 200 of FIG. 2 may apply a channel estimation algorithm to an analog Rx signal to estimate a frequency-domain channel value. The sensor operation module 200 may determine whether a touch occurs relative to the estimated value and an amount of a change of a channel. In this regard, the Rx module 260 of the sensor operation module 200 may perform down-conversion, ADC sampling, DCT, and LS channel estimation with respect to an Rx signal yj(t) obtained from a sensor panel 163 of FIG. 2. The Rx signal yj(t) obtained from the sensor panel 163 may be calculated using Equation 2 below.

$$y_j(t) = \sum_{i=1}^{6} h_{ij}(t) x_i(t) + z_j(t) \qquad \text{... Equation 2}$$

Herein, magnitude of a value i may be the number of Rx channels of the sensor panel 163. The Rx channels may be changed by operation settings of an electronic device 100 of FIG. 1 or user settings. yj(t) may be a channel estimation result, hij(t) may be a characteristic value corresponding to the sensor panel 163. xi(t) may be a driving signal. zj(t) may be a noise signal. A signal passing through an ADC may be a time-domain signal for an Rx signal, and an estimation value may be expressed by yj. A signal to which DCT is applied may be a frequency-domain signal for the Rx signal, and an estimation value may be expressed by Yj.

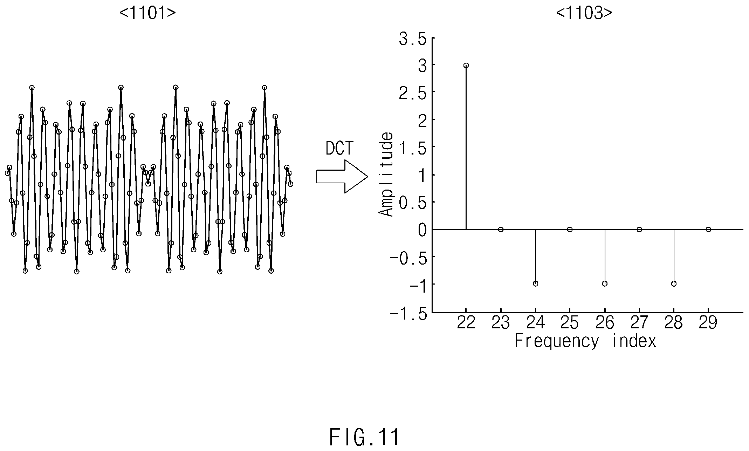

FIG. 11 illustrates a process of performing DCT of an Rx signal according to various embodiments of the present disclosure.

Referring to FIG. 11, as described with reference to FIG. 10, the signal yj(t) obtained from the sensor panel 163 may be expressed by the signal yj by performing down-conversion and ADC sampling. DCT of the signal yj may be performed using Equation 3 below.

$$y_j = \left( y_j[1], ..., y_j[N] \right) \xrightarrow[\text{DCT with N}]{} Y_j[s], ..., Y_j[s+L-1] \qquad \text{... Equation 3}$$

Herein, L may be the number of sub-carriers, s may correspond to a start point position value (e.g., the lowest index among orthogonal signal frequency indexes) having a data value among code sequences shown in graph 401 of FIG. 4. An L value may correspond to an end point position value having a data value. For example, s and L may correspond to a range value in which an orthogonal code [1 1 -1 -1 1 1 -1 -1] of a sensor operation module 200 of FIG. 2 is located.

As shown in graphs 1101 and 1103, DCT of the number L of sub-carriers may be performed using Equation 4 below.

$$Y_j[k] = \sum_{n=1}^{N} y_j[n] \cdot A\cos\left(\frac{2\pi}{N}kn\right), k = s, s+1,\dots,s+L-1 \qquad \dots \text{Equation 4}$$

Herein, Yj[k] may be a result value of performing DCT. s may be the lowest index among orthogonal frequency indexes. A may be a scaling factor. L may be the highest index among the orthogonal signal frequency indexes and may be the number of sub-carriers.

According to various embodiments of the present disclosure, the sensor operation module 200 may perform channel estimation for a DCT signal. For example, the sensor operation module 200 may perform channel value estimation, for minimizing the square of difference between an Rx signal and a driving signal in a frequency domain, using Equation 5 below.

$$\left(\hat{H}_{1j},\dots,\hat{H}_{N_c j}\right) = \underset{H'_{1j},\dots,H'_{N_c j}}{\arg\min} E\left[\left|Y_j^{eff} - \sum_{i=1}^{N_c} H'_{ij}X_i^{eff}\right|^2\right] \qquad \dots \text{Equation 5}$$

Herein, $Y_j^{eff}$ may be ($Y_j[s],\dots,Y_j[s + L - 1]$). $X_i^{eff}$ may be ($X_i[s],\dots,X_i[s + L - 1]$).

The LS channel estimation expressed by Equation 5 may be implemented by match filtering expressed by Equation 6 below.

$$\hat{H}_{ij} = Y_j^{eff} \cdot X_i^{eff} \Big/ \left\|X_i^{eff}\right\|^2 \qquad \dots \text{Equation 6}$$

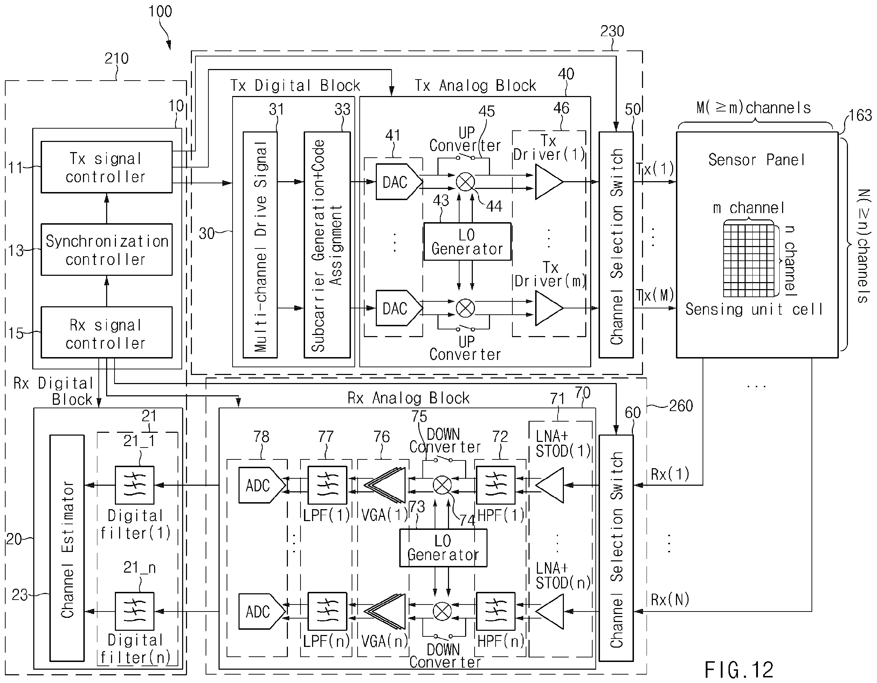

FIG. 12 is a block diagram illustrating a configuration of an electronic device which may perform selective operation of a carrier according to various embodiments of the present disclosure.

Referring to FIG. 12, according to various embodiments of the present disclosure, an electronic device 100 of FIG.1 may include a sensor panel 163, a Tx module 230, an Rx module 260, and a control module 210.

In the sensor panel 163, M electrode lines may be disposed in a first direction and N electrode lines may be disposed in a second direction intersecting the first direction. The M electrode lines may be used as, for example, driving signal providing lines, and the N electrode lines may be used as, for example, Rx signal obtaining lines. The above-mentioned sensor panel 163 may operate at least one group of electrode lines (e.g., m×n electrode lines) by first and second channel selection switches 50 and 60.

The Tx module 230 may include, for example, a Tx digital block 30, a Tx analog block 40, and the first channel selection switch 50.

The Tx digital block 30 may include, for example, a signal generation module 31 (e.g., a module which obtains an OFDM signal) which generates a multi-channel driving signal and a code assignment module 33 (e.g., a module which obtains and assigns a CDM signal to be assigned to an OFDM signal). The signal generation module 31 may generate, for example, a signal according to OFDM described with reference to FIG. 3. The signal generation module 31 may transmit the generated signal to the code assignment module 33. As described with respect to FIG. 3, the code assignment module 33 may transmit, for example, a plurality of sub-carriers with a signal, in which a code is assigned to an orthogonal frequency, to the Tx analog block 40. According to various embodiments of the present disclosure, the Tx digital block 30 may previously store, for example, a signal sequence prepared for multi-channel drive in a memory 130 of FIG. 1. The Tx digital block 30 may call the stored signal sequence and may use the signal sequence to generate a waveform of a DAC 41.

The Tx analog block 40 may include, for example, the DAC 41, a first carrier generator 43 (e.g., a local oscillator (LO) generator), a first mixer 44, a first bypass switch 45, and a Tx driver 46. The DAC 41 may convert a digital signal provided from the code assignment module 33 into an analog signal. A signal output from the DAC 41 may be provided to the first mixer 44 according to settings. The first carrier generator 43 may generate a certain frequency (e.g., a specified high frequency) signal and may provide the generated certain frequency signal to the first mixer 44. The specified high frequency signal may be a signal of a certain frequency band, for example, a signal of 500 KHz or more. An output signal of the DAC 41 may be transmitted with a signal of a specified frequency band to the Tx driver 46 through the first mixer 44. The above-mentioned first mixer 44 may play a role as an up-converter.

The Tx driver 46 may amplify the output of the first mixer 44 and may transmit the amplified signal to the first channel selection switch 50. The first bypass switch 45 may provide a path which may directly transmit the output signal of the DAC 41 to the Tx driver 46. The electronic device 100 may directly transmit a driving signal to the Tx driver 46 according to settings without transmitting a carrier with the driving signal. In this regard, the sensor operation module 200 may change a state of the first bypass switch 45 to control (e.g., to control to be bypassed) the first bypass switch 45 to operate the first mixer 44 or not to operate the first mixer 44.

The first channel selection switch 50 may transmit a driving signal transmitted from the Tx driver 46 to at least one of a plurality of electrode lines of a first electrode layer disposed in the sensor panel 163. In this case, the first channel selection switch 50 may provide a separate driving signal to each of the plurality of electrode lines or a certain group (e.g., a certain number of electrode lines), according to settings. For example, when the Tx analog block 40 provides six driving signals, the first channel selection switch 50 may classify and provide the six driving signals to the plurality of electrode lines. Alternatively, the first channel selection switch 50 may classify the plurality of electrode lines into six groups and may provide different driving signals to respective groups.

The Rx module 260 may include the second channel selection switch 60 and an Rx analog block 70.

The second channel selection switch 60 may connect with a second electrode layer of the sensor panel 163. The second channel selection switch 60 may be switched to receive an Rx signal of each of a plurality of electrode lines of the second electrode layer or to selectively receive an Rx signal of some of the plurality of electrode lines. Alternatively, the second channel selection switch 60 may scan, for example, the plurality of electrode lines of the second electrode layer with respect to certain groups and may transmit an Rx signal received from every group to the Rx analog block 70. The Rx analog block 70 may include an amplification module 71, a HPF 72, a second mixer 74, a second bypass switch 75, a second carrier generator 73 (e.g., an LO generator), a VGA 76, a LPF 77, and an ADC 78.

The amplification module 71 may amplify an Rx signal transmitted from the second channel selection switch 60. For example, the amplification module 71 may be a LNA which amplifies a received signal The signal amplified by the amplification module 71 may be transmitted to the HPF 72. According to various embodiments of the present disclosure, the amplification module 71 may play a role as, for example, a single to differential converter (STDO).

The HPF 72 may filter a signal of a specified frequency band or less in the Rx signal amplified by the amplification module 71. For example, a signal in the Tx module 230 may be a driving signal loaded on a carrier of several MHz through the first mixer 44. After various noises of a band of hundreds of KHz or less flows in the driving signal while the driving signal passes through a panel, this driving signal may be received in the Rx module 260. The HPF 72 may filter energy which flows in from the sensor panel 163, for example, a signal of a band of hundreds of KHz while a baseband signal is not affected.

The Rx signal passing through the HPF 72 may be restored to a baseband signal by the second mixer 74 of the Rx module 260. In this regard, the second mixer 74 may multiply the received Rx signal by a carrier generated by the second carrier generator 73 to offset the carrier generated by the first carrier generator 43.

The second bypass switch 75 may provide a path which transmits a signal passing through the HPF 72 to the VGA 76 without passing through the second mixer 74. When the Tx module 230 does not perform a specified frequency multiplication work through the first mixer 44, for example, when a driving signal is transmitted to the Tx driver 46 through the first bypass switch 45, the second bypass switch 75 may be activated. When the Tx module 230 provides a specified frequency with a signal, for example, when the Tx module 230 performs the specified frequency multiplication through the first mixer 44, the second bypass switch 75 may be inactivated.

The VGA 76 may perform variable gain amplification. The VGA 76 may perform variable gain amplification of a signal passing through the second mixer 74 several numbers of times to have a specified gain. The variable gain amplified signal by the VGA 76 may be transmitted to the LPF 77. The LPF 77 may remove energy of a specified high frequency band from the transmitted signal and may transmit the signal to the ADC 78. The ADC 78 may convert the transmitted analog signal into a digital signal and may transmit the converted digital signal to the control module 210.

The control module 210 may include a signal processing module 10 and a signal estimation module 20.

The signal estimation module 20 may be disposed in, for example, the Rx module 260. The signal estimation module 20 may include a digital filter 21 and a channel estimator 23. A signal provided from the Rx module 260 may include a background white noise. Therefore, the digital filter 21, such as a moving average filter, may be used to remove a noise, such as a background white noise, or to additionally remove a noise which is not removed in analog-digital conversion to output a clearer shape of a signal.

The channel estimator 23 may detect a converted signal and may perform channel estimation according to the detected signal using a specified algorithm, for example, an LS channel estimation algorithm to estimate whether a touch device is adjacent to any channel. The result estimated by the channel estimator 23 may be provided to a processor 120 of FIG. 1 to be applied to a currently operated function or to operate as an input event of executing a new function. Alternatively, the result may be invalidated according to an operated function.

The signal processing module 10 may include a Tx signal controller 11, a synchronization controller 13, and an Rx signal controller 15.

The Tx signal controller 11 may control the Tx digital block 30, the Tx analog block 40, and the first channel selection switch 50 to provide a driving signal to the sensor panel 163. For example, the Tx signal controller 11 may control a switching state of the first channel selection switch 50 to provide a signal to at least some of the electrode lines of the sensor panel 163. In addition, the Tx signal controller 11 may control the Tx digital block 30 to generate a signal to which an orthogonal frequency and a code are assigned or to obtain a code sequence stored in the memory 130. The Tx signal controller 11 may control whether to operate the first mixer 44 of the Tx analog block 40 to control specified frequency multiplication.

The synchronization controller 13 may control signal synchronization between the Tx signal controller 11 and the Rx signal controller 15. For example, the synchronization controller 13 may control synchronization between signal generation of the first carrier generator 43 and signal generation of the second carrier generator 73. The first carrier generator 43 and the second carrier generator 73 may be integrated to operate as one carrier generator. In this case, the synchronization controller 13 may control a baseband signal of a driving signal and an operation of the carrier generator. In addition, the synchronization controller 13 may control synchronization between signal provision of the Tx signal controller 11 and signal estimation of the signal estimation module 20.

The Rx signal controller 15 may control the Rx module 260 or the signal estimation module 20. For example, the Rx signal controller 15 may control a switching state of the second channel selection switch 60 according to settings to adjust the number of Rx channels to be substantially and simultaneously verified. The Rx signal controller 15 may control the Rx analog block 70 to control operation of the second mixer 74. For example, the Rx signal controller 15 may control operation of the second mixer 74 to equally operate in response to operation of the first mixer 44 of the Tx signal controller 11.

As described above, according to various embodiments of the present disclosure, Tx module 230 of the sensor operation module 200 may assign at least one or more driving signals, generated according to a signal in which a code are assigned to an orthogonal frequency, for each channel and may provide the driving signals to the sensor panel 163. The sensor operation module 200 may restore an Rx signal. Therefore, the sensor operation module 200 may substantially and simultaneously provide a driving signal having orthogonal characteristics to each of a plurality of channels and may reliably classify a received signal. In addition, according to various embodiments of the present disclosure, the sensor operation module 200 may avoid, for example, a frequency band in which a noise occurs and may drive the sensor panel 163 by providing a specified frequency with a driving signal to the sensor panel 163.

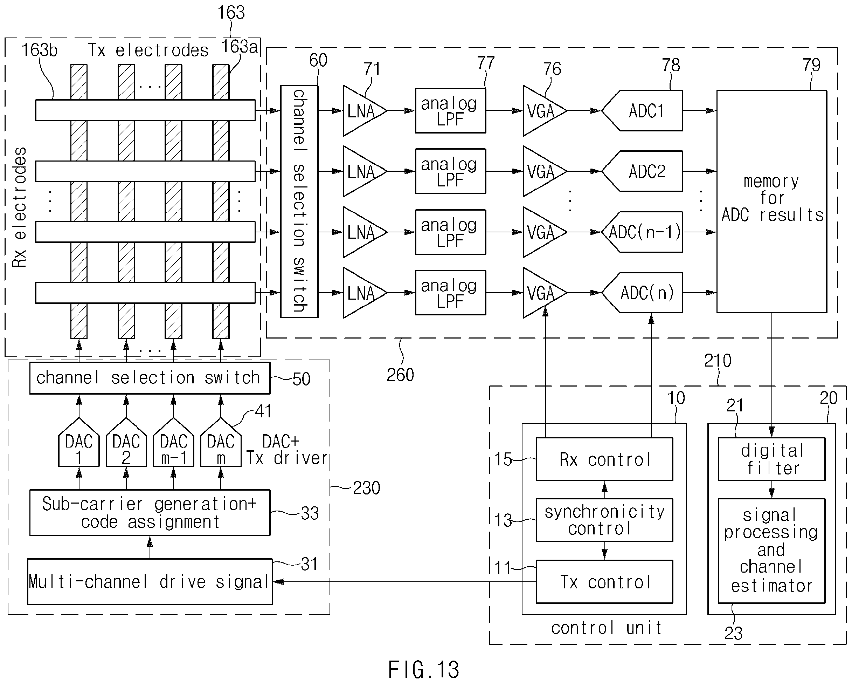

FIG. 13 is a block diagram illustrating a configuration of an electronic device which includes a Tx module including a signal generating module and a DAC according to various embodiments of the present disclosure.

Referring to FIG. 13, according to various embodiments of the present disclosure, an electronic device 100 of FIG. 1 may include a sensor panel 163, a Tx module 230, an Rx module 260, and a control module 210.

The sensor panel 163 may have the same or similar structure as or to the sensor panel 163 described with reference to FIG. 12. For example, the sensor panel 163 may include a plurality of first electrode layers 163a which are disposed at a specified interval in a first direction and a plurality of second electrode layers 163b which are spaced at a certain distance from the first electrode layers 163a and are disposed at a specified interval in a second direction which is different from the first direction. For example, the first electrode layers 163a may include a plurality of Tx electrodes (or channels) which are disposed at a specified interval in a longitudinal direction. The second electrode layers 163b may include a plurality of Rx electrodes (or channels) which are disposed at a specified interval in a transverse direction intersecting the first electrode layers 163a.

The first electrode layer 163a may connect to the Tx module 230. For example, the first electrode layers 163a may connect with the first channel selection switch 50 of the Tx module 230. A plurality of electrode lines included in the first electrode layers 163a may generate an electric field of magnitude corresponding to a driving signal provided from the Tx module 230.

The second electrode layers 163b may connect with the Rx module 260. For example, the second electrode layers 163b may connect with the second channel selection switch 60 of the Rx module 260. A plurality of electrode lines included in the second electrode layers 163b may provide a signal through the electric field. This signal may be transmitted as an Rx signal to the Rx module 260. The plurality of electrode lines (e.g., detection channels) included in the second electrode layer 163b may be disposed on an area (e.g., a front or side surface or a rear one side of a display panel 161 of the electronic device 100) which may be touched by a user.

The Tx module 230 may include, for example, a signal generation module 31 which generates a multi-channel driving signal, a code assignment module 33 which generates a sub-carrier or assigns a code, DACs 41, and a first channel selection switch 50. Additionally or alternatively, each of the DACs 41 may include a Tx driver. The code assignment module 33 may transmit Tx signals, configured with the sum of a plurality of sub-carriers in which codes are assigned to orthogonal frequencies, to the DACs 41. The number of the sub-carriers may be defined in response to operating a plurality of channels (e.g., to driving Tx electrode lines disposed in the sensor panel 163 by a plurality of driving signals). The DACs 41 may convert a digital signal provided from the code assignment module 33 into an analog signal, may amplify the analog signal with a specified level, and may transmit the amplified signal to the first channel selection switch 50. The first channel selection switch 50 may provide a driving signal to at least a part (e.g., m Tx electrodes) of an area of the sensor panel 163 according to settings.

The Rx module 260 may include a second channel selection switch 60 connected with the second electrode layers 163b of the sensor panel 163, an amplification module 71, LPFs 77, VGAs 76, ADCs 78, and an Rx signal buffer 79. The second selection switch 60 may adjust a switching state to substantially and simultaneously scan at least one Rx electrode (e.g., n Rx electrodes) according to settings. The amplification module 71 may amplify a noise of a low frequency band. Each of the VGAs may perform variable gain amplification. Each of the ADCs 78 may convert the variable gain amplified signal into a digital signal and may transmit the converted digital signal to the Rx signal buffer 79. The Rx signal buffer 79 may play a role in temporarily storing signals provided from the ADCs 78 and transmitting the signals to the control module 210.

The control module 210 may include a signal control module 10 and a signal estimation module 20. The signal control module 10 may include a Tx signal controller 11, a synchronization controller 13, and an Rx signal controller 15. The Tx signal controller 11 may control the Tx digital block 30 in connection with generating a multi-channel driving signal. The Rx signal controller 15 may control magnitude of variable gain amplification and the ADCs 78.

The signal estimation module 20 may include a digital filter 21 and a channel estimator 23. As described above, the digital filter 21 may perform additional signaling for recovering a waveform in connection with improving a recognition rate of a signal according to a plurality of digital filters 21_1 to 21_n. The channel estimation module 23 may estimate a point on which a touch occurs by applying a specified channel estimation algorithm.

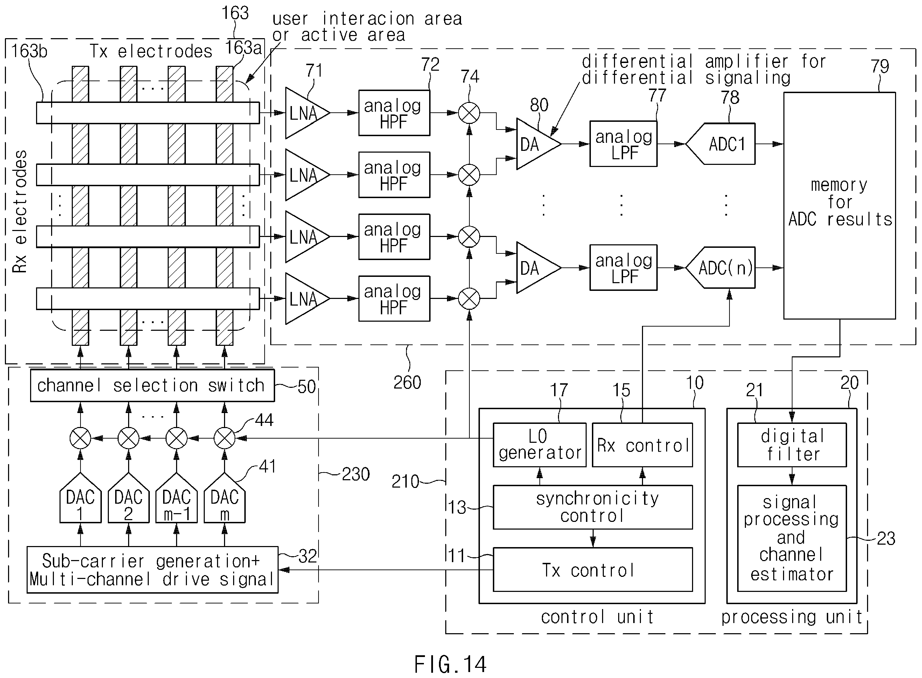

FIG. 14 is a block diagram illustrating a configuration of an electronic device which operates a carrier according to various embodiments of the present disclosure.

Referring to FIG. 14, according to various embodiments of the present disclosure, an electronic device 100 of FIG. 1 may include a sensor panel 163, a Tx module 230, an Rx module 260, and a control module 210.

The sensor panel 163 may have the similar structure to the sensor panel 163 described with reference to FIG. 13. For example, the sensor panel 163 may include a plurality of first electrode layers 163a which are disposed at a specified interval in a first direction and a plurality of second electrode layers 163b which are spaced at a certain distance from the first electrode layers 163a and are disposed at a specified interval in a second direction which is different from the first direction.

The Tx module 230 may include, for example, a signal generation module 32 which generates a multi-channel driving signal and a sub-carrier, DACs 41 which convert a digital signal into an analog signal and additionally or alternatively amplify a driving signal, first mixers 44 which mix a carrier provided from the control module 210 with the driving signal, and a first channel selection switch 50. The first mixers 44 may include paths for providing a carrier successively or substantially and simultaneously. When a carrier of a specified frequency band is provided to an mth mixer among the first mixers 44, the mth mixer among the first mixers 44 may transmit the corresponding carrier to an adjacent m-1th mixer among the first mixers 44. Therefore, the first mixers 44 may successively transmit the carrier. Alternatively, the first mixers 44 may include paths to substantially and simultaneously provide the carrier to synchronize a Tx signal. The signal generation module 32 may provide unique code sequences to an mth DAC to a first DAC among the DACs 41, respectively.

The Rx module 260 may include an amplification module 71, HPFs 72, second mixers 74, differential amplifiers 80, LPFs 77, ADCs 78, and an Rx signal buffer 79. According to various embodiments of the present disclosure, the amplification module 71 may connect with the second electrode layers 163b of the sensor panel 163 one-to-one without passing through a second channel selection switch. Outputs of the amplification module 71 may be transmitted to the plurality of HPFs 72 one-to-one.

Signals in which a noise of a low frequency band is removed by the HPFs 72 may be transmitted to the second mixers 74. The second mixers 74 may be disposed to correspond to the plurality of PHFs 72 one-to-one. The second mixers 74 may transmit a carrier provided from a carrier generator 17 (e.g., an LO generator) or a carrier provided from another mixer to an adjacent another mixer.

The differential amplifiers 80 may receive output signals of a plurality of second mixers 74 (e.g., two second mixers 74) as input signals, may amplify a difference value between the two input signals, and may transmit the amplified signal to the LPFs 77. Therefore, one differential amplifier 80 may be disposed to process outputs of the two HPFs 72. Alternatively, the differential amplifiers may be configured to correspond to the plurality of HPFs 72 one-to-one and may repeatedly receive an output of the neighboring HPF 72. For example, an output of a first HPF among the HPFs 72 and an output of a second HPF among the HPFs 72 may be provided to a first differential amplifier among the differential amplifiers 80. An output of the second HPF among the HPFs 72 and an output of a third HPF among the HPFs 72 may be provided to a second differential amplifier among the differential amplifiers 80.

The above-mentioned differential amplifiers 80 may receive output signals of the plurality of second mixers 74 as input signals to offset a background white noise and a common noise which are formed in each of Rx electrode lines and may transmit only a signal change value to the LPFs 77. The LPFs 77 may be disposed to correspond to the differential amplifiers 80 one-to-one and may filter a high frequency band of each of signals output from the differential amplifiers 80. The signals filtered by the LPFs 77 may be transmitted to the ADCs 78. The transmitted signals are converted into digital signals, and the digital signals are transmitted to the Rx signal buffer 79.

The control module 210 may include a signal control module 10 and a signal estimation module 20. The signal control module 10 may include a Tx signal controller 11, an Rx signal controller 15, and a synchronization controller 13. The Tx signal controller 11 may control the signal generation module 32 of the Tx module 230. The Rx signal controller 15 may control, for example, operation of the ADCs 78. The synchronization controller 13 may control synchronization between the Tx signal controller 11 and the Rx signal controller 15 and may control synchronization of carrier provision of the carrier generator 17.

The signal estimation module 20 may include a digital filter 21 and a channel estimator 23. The signal estimation module 20 may detect, for example, a point changed according to a touch input using a specified channel estimation algorithm like the signal estimation module 20 described with reference to FIGS. 12 and 13. According to an embodiment of the present disclosure, the signal estimation module 20 may perform, for example, channel estimation according to match filtering.

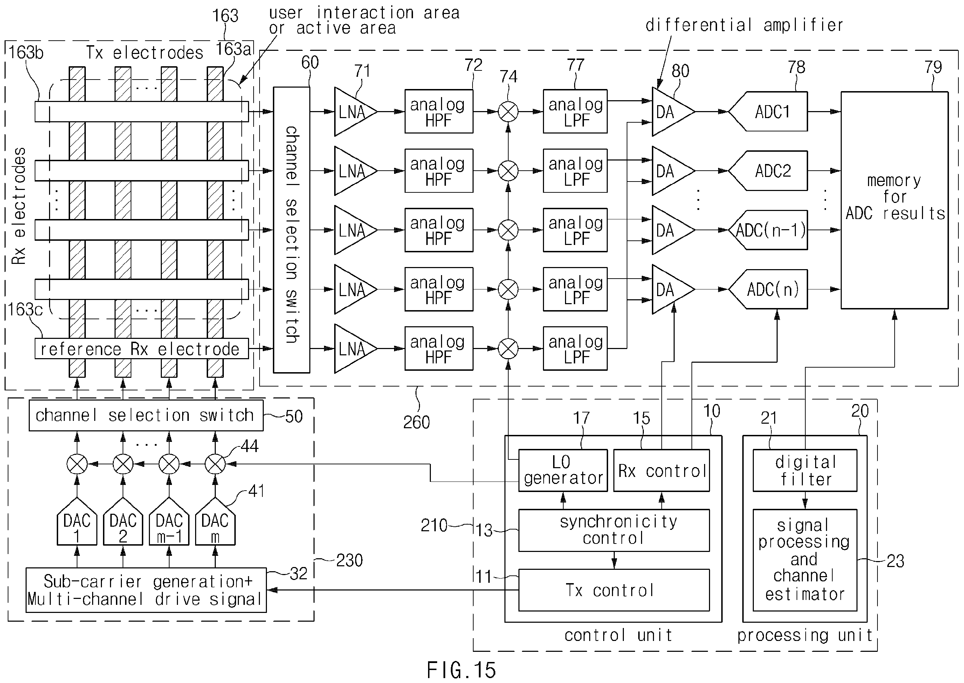

FIG. 15 is a block diagram illustrating a configuration of an electronic device which includes a reference electrode according to various embodiments of the present disclosure.

Referring to FIG. 15, according to various embodiments of the present disclosure, an electronic device 100 of FIG. 1 may include a sensor panel 163, a Tx module 230, an Rx module 260, and a control module 210.

The sensor panel 163 may have a shape in which a reference electrode 163c is added to the sensor panel 163 described with reference to FIG. 13. For example, the sensor panel 163 may include a plurality of first electrode layers 163a which are disposed at a specified interval in a first direction and a plurality of second electrode layers 163b which are spaced at a certain distance from the first electrode layers 163a and are disposed at a specified interval in a second direction which is different from the first direction. Additionally or alternatively, the second electrode layer 163b of the sensor panel 163 may include the reference electrode 163c. A signal output from the reference electrode 163c may be transmitted to the Rx module 260. The reference electrode 163c may be disposed on an area where a touch does not occur by a user. For example, the reference electrode 163c may be disposed in, for example, an implement (e.g., a case and the like) of the electronic device 100

The Tx module 230 may include, for example, a signal generation module 32 which generates a multi-channel driving signal and a sub-carrier, DACs 41 which convert a digital signal into an analog signal and additionally or alternatively amplify a driving signal, first mixers 44 which mix a carrier provided from the control module 210 with the driving signal, and a first channel selection switch 50. The first mixers 44 may include paths for successively providing a carrier. For example, when a carrier of a specified frequency band is provided to an mth mixer among the first mixers 44, the mth mixer among the first mixers 44 may transmit the corresponding carrier to an adjacent m-1th mixer among the first mixers 44. Therefore, the first mixers 44 may successively transmit the carrier. Although the carrier is successively transmitted on the paths of the first mixers 44, the carrier should be synchronized in view of signaling. The signal generation module 32 may provide unique code sequences to the DACs 41 in the order of to an mth DAC to a first DAC among the DACs 41.

The Rx module 260 may include a second channel selection switch 60, an amplification module 71, HPFs 72, second mixers 74, LPFs 77, differential amplifiers 80, ADCs 78, and an Rx signal buffer 79. At least one of the second channel selection switch 60, the amplification module 71, the HPFs 72, the LPFs 77, and the ADCs 78 may perform the same or similar role as or to the configurations described with reference to FIGS. 12 to 14. For example, the HPFs 72 or the LPFs 77 may remove a certain frequency band including noise components to remove additional noise components which are distributed in a band other than a band of a signal provided from the Tx module 230. The second mixers 74 may multiply signals passing through the HPFs 72 by a carrier provided from the carrier generator 17 which is included in the control module 210. A carrier provided from the second mixers 74 may be the same as a carrier provided from the first mixers 44. Each of the second mixer 74 may be disposed to receive an output signal of each of the HPFs 72 and may transmit a carrier to an adjacent another second mixer.

The differential amplifiers 80 may amplify, for example, differential voltages between a signal transmitted through the reference electrode 163c and signals passing through the LPFs 77. In this regard, the Rx module 260 may include a path having the first amplification module, the HPF, the second mixer, and the LPF. Voltage formed on the reference electrode 163c may be provided as a reference voltage of each of the differential amplifiers 80. The electronic device 100 may attenuate a noise by physical characteristics of the sensor panel 163 itself by operating the reference electrode 163c and the differential amplifiers 80. The reference electrode 163c may be disposed in an implement (e.g., a case and the like) of the electronic device 100. To maintain a change of a Tx signal and remove only common noise components in the differential amplifiers 80, a reversed signal of a signal received from another Rx signal is separately prepared to be used as a Tx signal for only the reference electrode 163c.

The control module 210 may include a signal control module 10 and a signal estimation module 20. The signal control module 10 may include a Tx signal controller 11, an Rx signal controller 15, and a synchronization controller 13. The Tx signal controller 11 may control the signal generation module 32 of the Tx module 230. The Rx signal controller 15 may control, for example, operation of the differential amplifiers 80 and the ADCs 78. The synchronization controller 13 may control synchronization between the Tx signal controller 11 and the Rx signal controller 15 and may control synchronization of carrier provision of the carrier generator 17.

The signal estimation module 20 may include a digital filter 21 and a channel estimator 23. The signal estimation module 20 may detect, for example, a point changed according to a touch input using a specified channel estimation algorithm like the signal estimation module 20 described with reference to FIGS. 12 and 14. According to an embodiment of the present disclosure, the signal estimation module 20 may perform, for example, channel estimation according to match filtering.

As described above, according to various embodiments of the present disclosure, the electronic device may include the sensor panel configured to form an electric field according to a driving signal and the sensor operation module configured to provide a driving signal, which has a code sequence in which OFDM and CDM are interchangeably used and has a PAPR of a specified value or more in connection with driving the sensor panel, to the sensor panel.

According to various embodiments of the present disclosure, the sensor operation module may provide a driving signal which has a PAPR of two or more to the sensor panel.

According to various embodiments of the present disclosure, the sensor operation module may convert a digital signal corresponding to the code sequence into an analog signal and may provide the converted analog signal.

According to various embodiments of the present disclosure, the sensor operation module may generate driving signals according to code sequences corresponding to the number of channels substantially and simultaneously driven in the sensor panel and may substantially and simultaneously provide the generated driving signals to the respective channels.

According to various embodiments of the present disclosure, the sensor operation module may adjust the number of the code sequences when changing the number of the channels, may generate driving signals corresponding to the adjusted code sequences, and may substantially and simultaneously provide the generated driving signals to the corresponding channels.

According to various embodiments of the present disclosure, the sensor operation module may signal information, corresponding to the number of channels substantially and simultaneously driven in the sensor panel, from a memory which stores signal information corresponding to the code sequence.

According to various embodiments of the present disclosure, the sensor operation module may perform at least one of amplitude clipping of a signal such that a PAPR or noise level of a signal corresponding to the code sequence is a specified value, peak reducing transmission signal composition of multiplying a signal generated by the code sequence by a PRS such that the PAPR or noise level of the signal corresponding to the code sequence is the specified value, and compensation of a distorted orthogonal signal of the clipped signal, a specified number of times.

According to various embodiments of the present disclosure, the sensor operation module may provide a carrier of a specified frequency band with the driving signal to the sensor panel.

According to various embodiments of the present disclosure, the sensor operation module may filter a signal of a low frequency band of an Rx signal received from the sensor panel using an HPF and may mix the same carrier as that of the driving signal with the filtered Rx signal using a mixer.

According to various embodiments of the present disclosure, the sensor operation module may receive an Rx signal from the sensor panel every Rx channels of a specified number of times and may perform specified match filtering of the Rx signal to perform channel estimation.

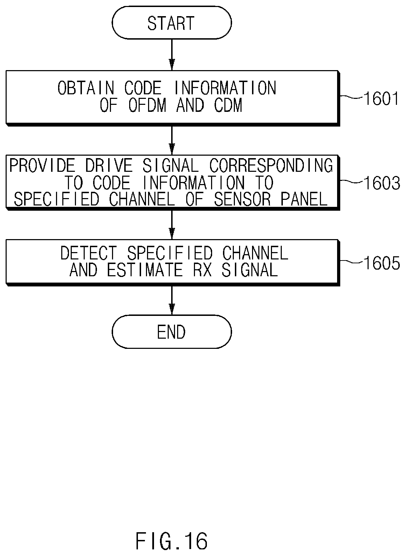

FIG. 16 is a flowchart illustrating a method for operating a sensor panel according to various embodiments of the present disclosure.

Referring to FIG. 16, in a method for operating a sensor panel according to various embodiments of the present disclosure, in operation 1601, a sensor operation module 200 of FIG. 2 may obtain code information of OFDM and CDM. For example, the sensor operation module 200 may generate a code sequence in which OFDM and CDM are interchangeably used or may obtain a code sequence from a memory 130 of FIG. 1. Alternatively, the sensor operation module 200 may obtain signal information, in which at least one of clipping, peak reducing transmission signal composition, or compensation of a distorted orthogonal signal is applied to a signal corresponding to the code sequence, a specified number of times from the memory 130 and may generate a driving signal corresponding to the signal information. Alternatively, the sensor operation module 200 may generate a driving signal in which clipping, peak reducing transmission signal composition, and compensation of a distorted orthogonal signal are applied to the signal corresponding to the code sequence, a specified number of times. In connection with generating the above-mentioned driving signal, the sensor operation module 200 may include only the memory 130 which stores the code sequence and signal information corresponding to the code sequence. Alternatively, the sensor operation module 200 may include generation modules (e.g., Tx modules) which generate a driving signal corresponding to the code sequence or signal information associated with the code sequence.

According to various embodiments of the present disclosure, to simultaneously drive a plurality channels of a sensor panel 163 of FIG. 2, the sensor operation module 200 may be configured to substantially and simultaneously provide a plurality of driving signals to the corresponding channels. In this regard, the sensor operation module 200 may obtain a plurality of code sequences in which OFDM and CDM are interchangeably used or a plurality of signal information from the memory 130 or may generate the plurality of code sequences or the plurality of signal information. Therefore, a driving signal generated in connection with multi-channel simultaneous drive may have a PAPR of 2 or more in response to including a plurality of sub-carriers. The sensor operation module 200 may apply the clipping, the peak reducing transmission signal composition, and the compensation of the distorted orthogonal signal a specified number of times to have a PAPR of a specified value or have a noise level of a specified value or may obtain signal information applied a specified number of times. In connection with generating the driving signal, the sensor operation module 200 may include a DAC and may generate an analog signal corresponding to a digital signal, such as the code sequence or the signal information.

In operation 1603, the sensor operation module 200 may provide a driving signal corresponding to the code information to a specified channel of the sensor panel 163. In this regard, the sensor operation module 200 may perform an operation of loading the driving signal on a carrier of a specified frequency band in connection with removing a noise. Alternatively, the sensor operation module 200 may provide the driving signal to the sensor panel 163 without the operation of loading the driving signal on a separate carrier. In the operation of providing the driving signal, the sensor operation module 200 may provide classified driving signals to channels set by a channel selection switch. In addition, when a plurality of electrode lines are set to be included in one channel, the sensor operation module 200 may substantially and simultaneously provide the same driving signal to the plurality of electrode lines.

In operation 1605, the sensor operation module 200 may detect a specified channel and may estimate an Rx signal. In this operation, the sensor operation module 200 may substantially and simultaneously detect a specified number of Rx channels according to settings. The sensor operation module 200 may differentially amplify a signal of a reference electrode and a signal of an Rx electrode in a process of processing an Rx signal or may differentially amplify signals of a plurality of Rx electrodes. In addition, when a specified frequency is provided with a driving signal, the sensor operation module 200 may perform carrier multiplication for offsetting the corresponding signal. The sensor operation module 200 may repeatedly perform the above-mentioned operations while the sensor panel 163 operates and may perform channel estimation according to the performed result. When performing the channel estimation, the sensor operation module 200 may perform the channel estimation through match filtering to simply and quickly perform the channel estimation.

As described above, according to various embodiments of the present disclosure, the method for operating the sensor panel may include providing a driving signal, which has a code sequence in which OFDM and CDM are interchangeably used and has a PAPR of a specified value or more in connection with driving the sensor panel, to the sensor panel, obtaining an Rx signal corresponding to the driving signal provided to the sensor panel, and detecting whether detection occurs or a detection point according to channel estimation of the Rx signal.

According to various embodiments of the present disclosure, the providing of the driving signal may include providing a driving signal, having a PAPR of 2 or more, to the sensor panel.

According to various embodiments of the present disclosure, the providing of the driving signal may include converting a digital signal corresponding to the code sequence into an analog signal.

According to various embodiments of the present disclosure, the providing of the driving signal may include obtaining code sequences, in which OFDM and CDM are interchangeably used, in response to the number of channels substantially and simultaneously driven in the sensor panel and generating driving signals corresponding to the code sequences and substantially and simultaneously providing the driving signals to the respective channels.

According to various embodiments of the present disclosure, the providing of the driving signal may further include adjusting the number of the code sequences in response to a change of the number of the channels and generating driving signals corresponding to the adjusted code sequences and substantially and simultaneously providing the driving signals to the corresponding channels.

According to various embodiments of the present disclosure, the providing of the driving signal may include obtaining signal information, corresponding to the number of channels substantially and simultaneously driven in the sensor panel, from a memory which stores signal information corresponding to the code sequence and generating a driving signal to be provided to the respective channels according to the signal information obtained in response to the number of the channels.

According to various embodiments of the present disclosure, the method may further include at least one of performing amplitude clipping a specified number of times such that a PAPR or noise level of a signal corresponding to the code sequence is a specified value, performing peak reducing transmission signal composition of multiplying a signal generated by the code sequence by a PAPR PRS a specified number of times such that the PAPR or noise level of the signal corresponding to the code sequence is the specified value, or performing compensation of a distorted orthogonal signal of the clipped signal a specified number of times.

According to various embodiments of the present disclosure, the providing of the driving signal may include providing a carrier of a specified frequency band with the driving signal to the signal panel.

According to various embodiments of the present disclosure, the method may further include filtering a signal of a low frequency band of an Rx signal received from the sensor panel using an HPF and mixing the same carrier as that of the driving signal with the filtered Rx signal using a mixer.

According to various embodiments of the present disclosure, the method may further include receiving an Rx signal from the sensor panel every specified Rx channels and performing specified match filtering according to the Rx signal to perform channel estimation.

According to various embodiments of the present disclosure, the method may further include performing specified match filtering according to an Rx signal received from the sensor panel to perform channel estimation.

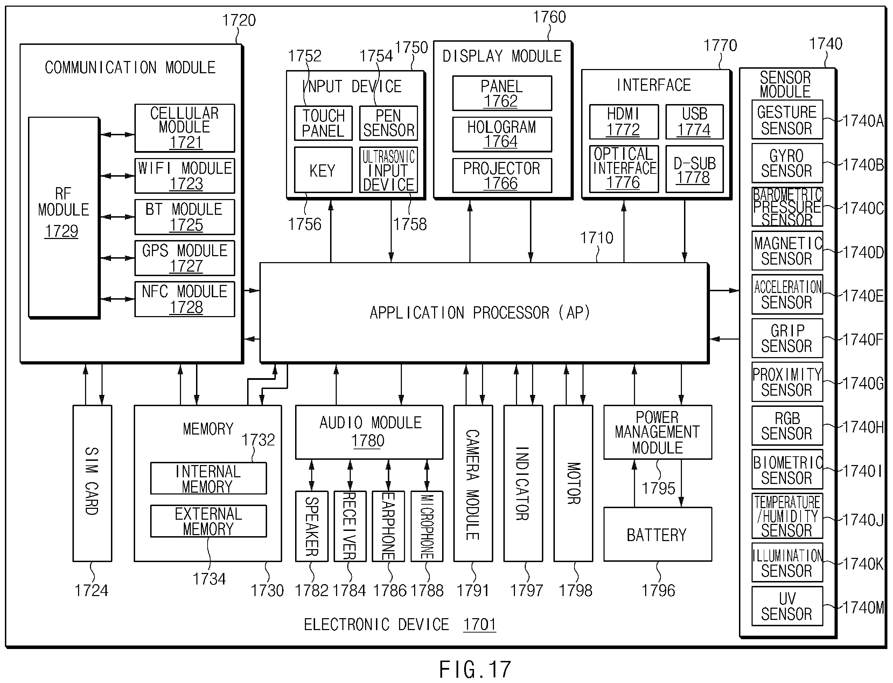

FIG. 17 is a block diagram illustrating a configuration of an electronic device according to various embodiments of the present disclosure.

Referring to FIG. 17, an electronic device 1701 may include, for example, all or some of an electronic device 100 shown in FIG. 1. The electronic device 1701 may include one or more processors 1710 (e.g., an AP), a communication module 1720, a subscriber identification module (SIM) 1724, a memory 1730, a sensor module 1740, an input device 1750, a display module 1760, an interface 1770, an audio module 1780, a camera module 1791, a power management module 1795, a battery 1796, an indicator 1797, and a motor 1798.

The processor 1710 may drive, for example, an OS or an application program to control a plurality of hardware or software components connected thereto and may process and compute a variety of data. The processor 1710 may be implemented with, for example, a system on chip (SoC). According to an embodiment of the present disclosure, the processor 1710 may further include a graphics processing unit (GPU) (not shown) and/or an image signal processor (not shown). The processor 1710 may include at least some (e.g., a cellular module 1721) of the components shown in FIG. 17. The processor 1710 may load instructions or data received from at least one of other components (e.g., non-volatile memories) into a volatile memory to process the instructions or the data, and may store various data in a non-volatile memory.

The communication module 1720 may have the same or similar configuration as or to that of a communication interface 170 of FIG. 1. The communication module 1720 may include, for example, a cellular module 1721, a Wi-Fi module 1723, a BT module 1725, a GPS module 1727, a NFC module 1728, and a RF module 1729.

The cellular module 1721 may provide, for example, a voice call service, a video call service, a text message service, or an Internet service, and the like through a communication network. According to an embodiment of the present disclosure, the cellular module 1721 may identify and authenticate the electronic device 1701 within a communication network using the SIM 1724 (e.g., a SIM card). According to an embodiment of the present disclosure, the cellular module 1721 may perform at least some of functions which may be provided by the processor 1710. According to an embodiment of the present disclosure, the cellular module 1721 may include a CP.

The Wi-Fi module 1723, the BT module 1725, the GPS module 1727, or the NFC module 1728 may include, for example, a processor for processing data transmitted and received through the corresponding module. According to various embodiments of the present disclosure, at least some (e.g., two or more) of the cellular module 1721, the Wi-Fi module 1723, the BT module 1725, the GPS module 1727, or the NFC module 1728 may be included in one integrated chip (IC) or an IC package.

The RF module 1729 may transmit and receive, for example, a communication signal (e.g., an RF signal). The RF module 1729 may include, for example, a transceiver (not shown), a power amplifier module (PAM) (not shown), a frequency filter (not shown), a LNA (not shown), or an antenna (not shown), and the like. According to another embodiment of the present disclosure, at least one of the cellular module 1721, the Wi-Fi module 1723, the BT module 1725, the GPS module 1727, or the NFC module 1728 may transmit and receive an RF signal through a separate RF module.

The SIM 1724 may be, for example, a card which includes a SIM and/or an embedded SIM. The SIM 1724 may include unique identification information (e.g., an integrated circuit card identifier (ICCID)) or subscriber information (e.g., an international mobile subscriber identity (IMSI)).

The memory 1730 (e.g., a memory 130 of FIG. 1) may include, for example, an embedded memory 1732 or an external memory 1734. The embedded memory 1732 may include at least one of, for example, a volatile memory (e.g., a dynamic random access memory (DRAM), a static RAM (SRAM), or a synchronous dynamic RAM (SDRAM), and the like), a non-volatile memory (e.g., a one-time programmable read only memory (OTPROM), a programmable ROM (PROM), an erasable and programmable ROM (EPROM), an electrically erasable and programmable ROM (EEPROM), a mask ROM, a flash ROM, a flash memory (e.g., a not and (NAND) flash or a not or (NOR) flash), and the like), a hard drive, or a solid state drive (SSD).

The external memory 1734 may further include a flash drive, for example, a compact flash (CF), a secure digital (SD), a micro-SD, a mini-SD, an extreme digital (xD), a multimedia card (MMC), or a memory stick, and the like. The external memory 1734 may be functionally and/or physically connected with the electronic device 1701 through various interfaces.

The sensor module 1740 may measure, for example, a physical quantity or may detect an operation state of the electronic device 1701, and may convert the measured or detected information into an electric signal. The sensor module 1740 may include at least one of, for example, a gesture sensor 1740A, a gyro sensor 1740B, an atmospheric pressure sensor 1740C, a magnetic sensor 1740D, an acceleration sensor 1740E, a grip sensor 1740F, a proximity sensor 1740G, a color sensor 1740H (e.g., red, green, blue (RGB) sensor), a biosensor 17401, a temperature/humidity sensor 1740J, an illumination sensor 1740K, or an ultraviolet (UV) sensor 1740M. Additionally or alternatively, the sensor module 1740 may further include, for example, an e-nose sensor (not shown), an electromyography (EMG) sensor (not shown), an electroencephalogram (EEG) sensor (not shown), an electrocardiogram (ECG) sensor (not shown), an infrared (IR) sensor (not shown), an iris sensor (not shown), and/or a fingerprint sensor (not shown). The sensor module 1740 may further include a control circuit for controlling at least one or more sensors included therein. According to various embodiments of the present disclosure, the electronic device 1701 may further include a processor configured, as a part of the AP 810 or to be independent of the application 1710, to control the sensor module 1740, and may control the sensor module 1740 while the application 1710 is in a sleep state.

The input device 1750 may include, for example, a touch panel 1752, a (digital) pen sensor 1754, a key 1756, or an ultrasonic input unit 1758. The touch panel 1752 may use at least one of, for example, capacitive, resistive, infrared, and ultrasonic detecting methods. In addition, the touch panel 1752 may further include a control circuit. The touch panel 1752 may further include a tactile layer, and may provide a tactile reaction to a user.

The (digital) pen sensor 1754 may be, for example, a part of the touch panel 1752 and may include a separate sheet for recognition. The key 1756 may include, for example, a physical button, an optical key, or a keypad. The ultrasonic input unit 1758 may detect an ultrasonic wave generated by an input tool and may verify data corresponding to the detected ultrasonic wave, through a microphone (e.g., a microphone 1788).

The display module 1760 (e.g., the display 160 of FIG. 1) may include a panel 1762, a hologram device 1764, or a projector 1766. The panel 1762 may include the same or similar configuration as or to that of the display 160. The panel 1762 may be implemented to be, for example, flexible, transparent, or wearable. The panel 1762 and the touch panel 1752 may be integrated into one module. The hologram device 1764 may show a stereoscopic image in a space using interference of light. The projector 1766 may project light onto a screen to display an image. The screen may be positioned for example, inside or outside the electronic device 1701. According to an embodiment of the present disclosure, the display module 1760 may further include a control circuit for controlling the panel 1762, the hologram device 1764, or the projector 1766.

The interface 1770 may include, for example, an HDMI 1772, a USB 1774, an optical interface 1776, or a D-subminiature 1778. The interface 1770 may be included in, for example, a communication interface 170 shown in FIG. 1. Additionally or alternatively, the interface 1770 may include, for example, a mobile high definition link (MHL) interface, an SD card/ MMC interface, or an infrared data association (IrDA) standard interface.

The audio module 1780 may convert, for example, a sound and an electric signal in dual directions. At least some of components of the audio module 1780 may be included in, for example, an input and output interface 150 shown in FIG. 1. The audio module 1780 may process sound information input or output through, for example, a speaker 1782, a receiver 1784, an earphone 1786, or the microphone 1788, and the like.

The camera module 1791 may be, for example, a device which captures a still picture and a moving picture. According to an embodiment of the present disclosure, the camera module 1791 may include one or more image sensors (not shown) (e.g., a front sensor or a rear sensor), a lens (not shown), an ISP (not shown), or a flash (not shown) (e.g., an LED or a xenon lamp).

The power management module 1795 may manage, for example, power of the electronic device 1701. According to an embodiment of the present disclosure, the power management module 1795 may include a power management integrated circuit (PMIC) (not shown), a charger IC (not shown), or a battery or fuel gauge (not shown). The PMIC may perform a wired charging method and/or a wireless charging method. The wireless charging method may include, for example, a magnetic resonance method, a magnetic induction method, or an electromagnetic method, and the like. An additional circuit for wireless charging, for example, a coil loop, a resonance circuit, or a rectifier, and the like may be further provided. The battery gauge may measure, for example, the remaining capacity of the battery 1796 and voltage, current, or temperature thereof while the battery 1796 is charged. The battery 1796 may include, for example, a rechargeable battery and/or a solar battery.

The indicator 1797 may display a specific state of the electronic device 1701 or a part (e.g., the processor 1710) thereof, for example, a booting state, a message state, or a charging state, and the like. The motor 1798 may convert an electric signal into mechanical vibration, and may generate vibration or a haptic effect, and the like. Though not shown, the electronic device 1701 may include a processing unit (e.g., a GPU) for supporting a mobile TV. The processing unit for supporting the mobile TV may process media data according to the standard of, for example, digital multimedia broadcasting (DMB), digital video broadcasting (DVB), or media flow, and the like.

Each of the above-mentioned elements of the electronic device described herein may be configured with one or more components, and names of the corresponding elements may be changed according to the type of the electronic device. According to various embodiments of the present disclosure, the electronic device may include at least one of the elements described herein, some elements may be omitted from the electronic device, or other additional elements may be further included in the electronic device. In addition, some of the elements of the electronic device according to various embodiments of the present disclosure may be combined with each other to form one entity, thereby making it possible to perform the functions of the corresponding elements in the same manner as before the combination.

The terminology "module" used herein may mean, for example, a unit including one of hardware, software, and firmware or two or more combinations thereof. The terminology "module" may be interchangeably used with, for example, terminologies "unit", "logic", "logical block", "component", or "circuit", and the like. The "module" may be a minimum unit of an integrated component or a part thereof. The "module" may be a minimum unit performing one or more functions or a part thereof. The "module" may be mechanically or electronically implemented. For example, the "module" may include at least one of an application-specific integrated circuit (ASIC) chip, field-programmable gate arrays (FPGAs), or a programmable-logic device, which is well known or will be developed in the future, for performing certain operations.

According to various embodiments of the present disclosure, at least a part of a device (e.g., modules or the functions) or a method (e.g., operations) may be implemented with, for example, instructions stored in a computer-readable storage media which has a program module. When the instructions are executed by a processor (e.g., a processor 120 of FIG. 1), one or more processors may perform functions corresponding to the instructions. The computer-readable storage media may be, for example, the memory 130.

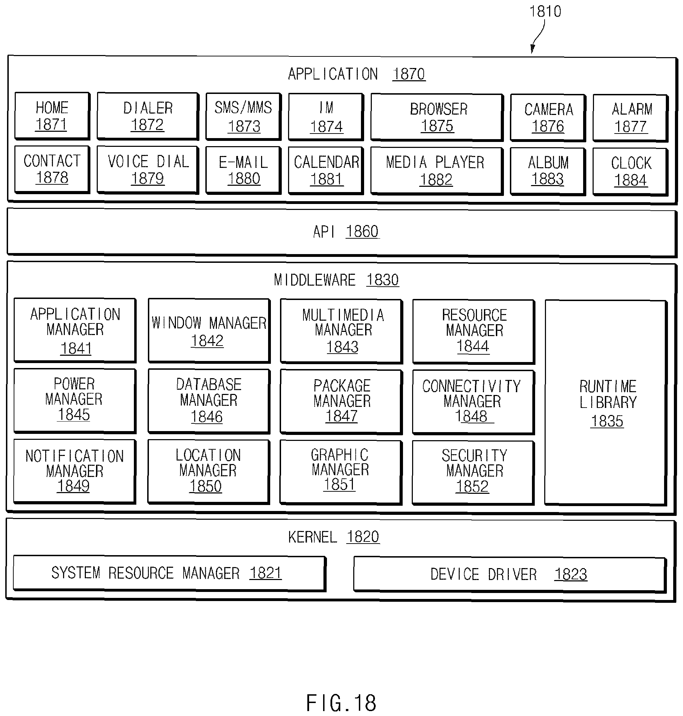

FIG. 18 is a block diagram illustrating a configuration of a program module according to various embodiments of the present disclosure.

Referring to FIG. 18, according to an embodiment of the present disclosure, a program module 1810 (e.g., a program 140 of FIG. 1) may include an OS for controlling resources associated with an electronic device (e.g., an electronic device 100 of FIG. 1) and/or various applications (e.g., an application 147 of FIG. 1) which are executed on the OS. The OS may be, for example, Android, iOS, Windows, Symbian, Tizen, or Bada, and the like.

The program module 1810 may include a kernel 1820, a middleware 1830, and an API 1860 and/or an application 1870. At least a part of the program module 1810 may be preloaded on the electronic device, or may be downloaded from an external electrode device (e.g., the external electronic device 104 of FIG. 1, the server device 106 of FIG. 1, and the like).

The kernel 1820 (e.g., the kernel 141 of FIG. 1) may include, for example, a system resource manager 1821 or a device driver 1823. The system resource manager 1821 may control, assign, or collect, and the like system resources. According to an embodiment of the present disclosure, the system resource manager 1821 may include a process management unit, a memory management unit, or a file system management unit, and the like. The device driver 1823 may include, for example, a display driver, a camera driver, a BT driver, a shared memory driver, a USB driver, a keypad driver, a Wi-Fi driver, an audio driver, or an inter-process communication (IPC) driver.

The middleware 1830 may provide, for example, functions the application 1870 needs in common, and may provide various functions to the application 1870 through the API 1860 such that the application 1870 efficiently uses limited system resources in the electronic device. According to an embodiment of the present disclosure, the middleware 1830 (e.g., a middleware 143 of FIG. 1) may include at least one of a runtime library 1835, an application manager 1841, a window manager 1842, a multimedia manager 1843, a resource manager 1844, a power manager 1845, a database manager 1846, a package manager 1847, a connectivity manager 1848, a notification manager 1849, a location manager 1850, a graphic manager 1851, or a security manager 1852.

The runtime library 1835 may include, for example, a library module used by a compiler to add a new function through a programming language while the application 1870 is executed. The runtime library 1835 may perform a function about input and output management, memory management, or an arithmetic function.

The application manager 1841 may manage, for example, a life cycle of at least one of the application 1870. The window manager 1842 may manage graphic user interface (GUI) resources used on a screen of the electronic device. The multimedia manager 1843 may ascertain a format necessary for reproducing various media files and may encode or decode a media file using a codec corresponding to the corresponding format. The resource manager 1844 may manage source codes of at least one of the application 1870, and may manage resources of a memory or a storage space, and the like.

The power manager 1845 may act together with, for example, a basic input/output system (BIOS) and the like, may manage a battery or a power source, and may provide power information necessary for an operation of the electronic device. The database manager 1846 may generate, search, or change a database to be used in at least one of the application 1870. The package manager 1847 may manage installation or update of an application distributed by a type of a package file.

The connectivity manager 1848 may manage, for example, a wireless connection, such as a Wi-Fi connection a BT connection, and the like. The notification manager 1849 may display or notify events, such as an arrival message, an appointment, and proximity notification, by a method which is not disturbed to the user. The location manager 1850 may manage location information of the electronic device. The graphic manager 1851 may manage a graphic effect to be provided to the user or a user interface (UI) related to the graphic effect. The security manager 1852 may provide all security functions necessary for system security or user authentication, and the like. According to an embodiment of the present disclosure, when the electronic device (e.g., the electronic device 100) has a phone function, the middleware 1830 may further include a telephony manager (not shown) for managing a voice or video communication function of the electronic device.

The middleware 1830 may include a middleware module which configures combinations of various functions of the above-described components. The middleware 1830 may provide a module which specializes according to kinds of OSs to provide a differentiated function. In addition, the middleware 1830 may dynamically delete some of old components or may add new components.

The API 1860 (e.g., an API 145 of FIG. 1) may be, for example, a set of API programming functions, and may be provided with different components according to OSs. For example, in case of Android or iOS, one API set may be provided according to platforms. In case of Tizen, two or more API sets may be provided according to platforms.

The application 1870 (e.g., an application 147 of FIG. 1) may include one or more of, for example, a home application 1871, a dialer application 1872, a short message service (SMS)/multimedia messaging service (MMS) application 1873, an instant message (IM) application 1874, a browser application 1875, a camera application 1876, an alarm application 1877, a contact application 1878, a voice dial application 1879, an e-mail application 1880, a calendar application 1881, a media player application 1882, an album application 1883, a clock application 1884, a health care application (e.g., an application for measuring quantity of exercise or blood sugar, and the like), or an environment information application (e.g., an application for providing atmospheric pressure information, humidity information, or temperature information, and the like), and the like.

According to an embodiment of the present disclosure, the application 1870 may include an application (hereinafter, for better understanding and ease of description, referred to as an "information exchange application") for exchanging information between the electronic device (e.g., the electronic device 100) and an external electronic device (e.g., the external electronic device 104 of FIG. 1). The information exchange application may include, for example, a notification relay application for transmitting specific information to the external electronic device or a device management application for managing the external electronic device.

For example, the notification relay application may include a function of transmitting notification information, which is generated by other applications (e.g., the SMS/MMS application, the e-mail application, the health care application, or the environment information application, and the like) of the electronic device, to the external electronic device (e.g., the external electronic device 104). In addition, the notification relay application may receive, for example, notification information from the external electronic device, and may provide the received notification information to the user of the electronic device.

The device management application may manage (e.g., install, delete, or update), for example, at least one (e.g., a function of turning on/off the external electronic device itself (or partial components) or a function of adjusting brightness (or resolution) of a display) of functions of the external electronic device (e.g., the external electronic device 104) which communicates with the electronic device, an application which operates in the external electronic device, or a service (e.g., a call service, a message service, and the like) provided from the external electronic device.

According to an embodiment of the present disclosure, the application 1870 may include an application (e.g., the health card application of a mobile medical device) which is preset according to an attribute of the external electronic device (e.g., the external electronic device 104). According to an embodiment of the present disclosure, the application 1870 may include an application received from the external electronic device (e.g., the server device 106 or the external electronic device 104). According to an embodiment of the present disclosure, the application 1870 may include a preloaded application or a third party application which may be downloaded from a server. Names of the components of the program module 1810 according to various embodiments of the present disclosure may differ according to kinds of OSs.

According to various embodiments of the present disclosure, at least a part of the program module 1810 may be implemented with software, firmware, hardware, or at least two or more combinations thereof. At least a part of the program module 1810 may be implemented (e.g., executed) by, for example, a processor (e.g., the processor 120). At least a part of the program module 1810 may include, for example, a module, a program, a routine, sets of instructions, or a process, and the like for performing one or more functions.

Certain aspects of the present disclosure can also be embodied as computer readable code on a non-transitory computer readable recording medium. A non-transitory computer readable recording medium is any data storage device that can store data which can be thereafter read by a computer system. Examples of the non-transitory computer readable recording medium include a Read-Only Memory (ROM), a Random-Access Memory (RAM), Compact Disc-ROMs (CD-ROMs), magnetic tapes, floppy disks, and optical data storage devices. The non-transitory computer readable recording medium can also be distributed over network coupled computer systems so that the computer readable code is stored and executed in a distributed fashion. In addition, functional programs, code, and code segments for accomplishing the present disclosure can be easily construed by programmers skilled in the art to which the present disclosure pertains.

At this point it should be noted that the various embodiments of the present disclosure as described above typically involve the processing of input data and the generation of output data to some extent. This input data processing and output data generation may be implemented in hardware or software in combination with hardware. For example, specific electronic components may be employed in a mobile device or similar or related circuitry for implementing the functions associated with the various embodiments of the present disclosure as described above. Alternatively, one or more processors operating in accordance with stored instructions may implement the functions associated with the various embodiments of the present disclosure as described above. If such is the case, it is within the scope of the present disclosure that such instructions may be stored on one or more non-transitory processor readable mediums. Examples of the processor readable mediums include a ROM, a RAM, CD-ROMs, magnetic tapes, floppy disks, and optical data storage devices. The processor readable mediums can also be distributed over network coupled computer systems so that the instructions are stored and executed in a distributed fashion. In addition, functional computer programs, instructions, and instruction segments for accomplishing the present disclosure can be easily construed by programmers skilled in the art to which the present disclosure pertains.

Modules or program modules according to various embodiments of the present disclosure may include at least one or more of the above-mentioned components, some of the above-mentioned components may be omitted, or other additional components may be further included. Operations executed by modules, program modules, or other components may be executed by a successive method, a parallel method, a repeated method, or a heuristic method. In addition, some operations may be executed in a different order or may be omitted, and other operations may be added.

According to various embodiments of the present disclosure, a computer recording medium may store an instruction which may be driven by at least one processor. The instruction may be set to provide a driving signal, which has a code sequence in which OFDM and CDM are interchangeably used and has a PAPR of a specified value or more in connection with driving a sensor panel, to obtain an Rx signal corresponding to the driving signal provided to the sensor panel, and to detect whether detection occurs or a detection point according to channel estimation of the Rx signal.

According to various embodiments of the present disclosure, the electronic device may perform multi-channel substantial and simultaneous drive of the sensor panel or may perform multi-channel substantial and simultaneous detection of the sensor panel, thus improving a detection speed.

According to various embodiments of the present disclosure, the electronic device may provide characteristics which are strong with respect to a noise by operating a driving signal according to orthogonal information and may avoid interference with a peripheral hardware device by operating a carrier of a specified frequency band.

According to various embodiments of the present disclosure, the present disclosure discloses at least one non-transitory computer readable recording medium for storing a computer program configured to be readable by at least one processor for instructing the at least one processor to execute a computer process for performing the method comprising: providing a driving signal, which has a code sequence in which orthogonal frequency division multiplexing (OFDM) and code division multiplexing (CDM) are interchangeably used and has a peak to average power ratio (PAPR) of a specified value with respect to driving the sensor panel, to the sensor panel; obtaining a receiving signal corresponding to the driving signal provided to the sensor panel; and detecting whether detection occurs or a detection point based on channel estimation of the receiving signal.

While the present disclosure has been shown and described with reference to various embodiments thereof, it will be understood by those skilled in the art that various changes in form and details may be made therein without departing from the scope of the present disclosure as defined by the appended claims.

**Claims**

1.   An electronic device (100) comprising:

   a sensor panel (163) included in one of a touch screen sensor, a fingerprint recognition sensor, or a pen recognition sensor, the sensor panel (163) being configured to form an electric field based on a driving signal; and
   a sensor operation module configured to provide to the sensor panel (163) the driving signal, which has a code sequence in which orthogonal codes of a code division multiplexing, CDM, scheme are applied to orthogonal carriers of an orthogonal frequency division multiplexing, OFDM, scheme and that has a peak to average power ratio, PAPR, of a specified value, wherein the sensor operation module is further configured to perform at least one of:
   peak reducing transmission signal composition of multiplying a signal generated by the code sequence by a PAPR reducing signal, PRS, such that the PAPR of the driving signal is the specified value, or amplitude clipping a signal such that a PAPR of the driving signal is the specified value and compensating a specified number of times a distorted orthogonal signal of the clipped signal

2.   The electronic device (100) of claim 1, wherein the driving signal has having a PAPR of at least two.

3.   The electronic device (100) of claim 1, wherein the sensor operation module is further configured to:

convert a digital signal corresponding to the code sequence into an analog signal, and
provide the converted analog signal as the driving signal.

4. The electronic device (100) of claim 1, wherein the sensor operation module is further configured to:
generate driving signals based on code sequences corresponding to the number of channels substantially simultaneously driven in the sensor panel (163), and substantially simultaneously provide the generated driving signals to the respective channels.

5. The electronic device (100) of claim 4, wherein the sensor operation module is further configured to:

adjust the number of the code sequences when changing the number of the channels,
generate driving signals corresponding to the adjusted code sequences, and substantially simultaneously provide the generated driving signals to the corresponding channels.

6. The electronic device (100) of claim 5, wherein the sensor operation module is further configured to obtain signal information, corresponding to the number of channels substantially simultaneously driven in the sensor panel (163), from a memory which stores signal information corresponding to the code sequence.

7. The electronic device (100) of claim 1, wherein the sensor operation module is further configured to provide a carrier of a specified frequency band with the driving signal to the sensor panel (163).

8. The electronic device (100) of claim 7, wherein the sensor operation module is further configured to:

filter a signal of a low frequency band of a received, Rx, signal from the sensor panel (163), and
mix the same carrier as that of the driving signal with the filtered Rx signal.

9. The electronic device (100) of claim 1, wherein the sensor operation module is further configured to:

receive a signal from the sensor panel (163) for each receiving channel, and
perform match filtering of the received signals to perform channel estimation.

10. A method for operating a sensor panel (163), the sensor panel (163) being included in one of a touch screen sensor, a fingerprint recognition sensor, or a pen recognition sensor, the method comprising:

providing to the sensor panel (163) a driving signal, which has a code sequence in which orthogonal codes of a code division multiplexing, CDM, scheme are applied to orthogonal carriers of an orthogonal frequency division multiplexing, OFDM, scheme and that has a peak to average power ratio, PAPR, of a specified value;
receiving a signal from the sensor panel (163) that corresponds to the driving signal provided to the sensor panel (163); and
detecting whether detection occurs at a detection point based on channel estimation of the received signal; further comprising at least one of:

peak reducing transmission signal composition of multiplying a signal generated by the code sequence by a PAPR reducing signal, PRS, a specified number of times such that the PAPR of the driving signal is the specified value; or
amplitude clipping a signal such that a PAPR of the driving signal is a specified value and compensating a specified number of times a distorted orthogonal signal of the clipped signal.

11. The method of claim 10, wherein providing the driving signal comprises at least one of:

providing a driving signal having a PAPR of at least two to the sensor panel (163);
converting a digital signal corresponding to the code sequence into an analog signal;
obtaining signal information, corresponding to the number of channels substantially simultaneously driven in the sensor panel (163), from a memory which stores signal information corresponding to the code sequence and generating a driving signal to be provided to the respective channel based on the signal information obtained in response to the number of the channels;
obtaining code sequences, in which orthogonal codes of a code division multiplexing, CDM, scheme are applied to orthogonal carriers of an orthogonal frequency division multiplexing, OFDM, scheme, in response to the number of channels substantially simultaneously driven in the sensor panel (163) and generating driving signals based on the code sequences and substantially simultaneously providing the generated driving signals to the respective channels.
providing a carrier of a specified frequency band with the driving signal to the sensor panel (163).

12. The method of claim 11, wherein providing the driving signal further comprises:
adjusting the number of the code sequences in response to changing the number of the channels; and
generating driving signals corresponding to the adjusted code sequences and substantially simultaneously providing the generated driving signals to the corresponding channels.

13. The method of claim 11, further comprising:

filtering a signal of a low frequency band of a signal received from the sensor panel (163) based on a high pass filter (72); and
mixing the same carrier as that of the driving signal with the filtered received signal based on a mixer (74).


**Patentansprüche**

1. Elektronische Vorrichtung (100), umfassend:

ein Sensorpanel (163), das in einem der folgenden enthalten ist: einem Touchscreen-Sensor, einem Fingerabdruckerkennungssensor oder einem Stifterkennungssensor, wobei das Sensorpanel (163) so gestaltet ist, dass es auf der Basis eines Steuersignals ein elektrisches Feld bildet; und
ein Sensorbetriebsmodul, das so gestaltet ist, dass es das Steuersignal an das Sensorpanel (163) bereitstellt, wobei das Signal eine Codesequenz aufweist, bei der orthogonale Codes eines Schemas eines Codemultiplexverfahrens, CDM, auf orthogonale Träger eines Schemas eines orthogonalen Frequenzmultiplexverfahrens, OFDM, angewendet werden, und das ein Verhältnis der Spitzenleistung zu der mittleren Leistung, PAPR, mit einem spezifizierten Wert aufweist, wobei das Sensorbetriebsmodul ferner so gestaltet ist, dass es mindestens eines der folgenden ausführt:

eine die Spitze reduzierende Zusammensetzung des Übertragungssignals der Multiplikation eines durch die Codesequenz erzeugten Signals mit einem das PAPR reduzierenden Signal, PRS, so dass das PAPR des Steuersignals der spezifizierte Wert ist; oder
Amplituden-Clipping eines Signals, so dass ein PAPR des Steuersignals der spezifizierte Wert ist, und Kompensieren eines verzerrten orthogonalen Signals des geclippten Signals mit einer spezifizierten Häufigkeit.

2. Elektronische Vorrichtung (100) nach Anspruch 1, wobei das Steuersignal ein PAPR von mindestens zwei aufweist.

3. Elektronische Vorrichtung (100) nach Anspruch 1, wobei das Sensorbetriebsmodul ferner für folgende Zwecke gestaltet ist:

Umwandeln eines digitalen Signals gemäß der Codesequenz in ein analoges Signal; und
Bereitstellen des umgewandelten analogen Signals als das Steuersignal.

4. Elektronische Vorrichtung (100) nach Anspruch 1, wobei das Sensorbetriebsmodul ferner für folgenden Zweck gestaltet ist:
Erzeugen von Steuersignalen auf der Basis von Codesequenzen entsprechend der Anzahl von Kanälen, die im Wesentlichen gleichzeitig in dem Sensorpanel (163) angesteuert werden, und wobei die erzeugten Steuersignale im Wesentlichen gleichzeitig an die entsprechenden Kanäle bereitgestellt werden.

5. Elektronische Vorrichtung (100) nach Anspruch 4, wobei das Sensorbetriebsmodul ferner für folgende Zwecke gestaltet ist:

Anpassen der Anzahl der Codesequenzen, wenn die Anzahl der Kanäle geändert wird;
Erzeugen von Steuersignalen entsprechend den angepassten Codesequenzen, und wobei die erzeugten Steuersignale im Wesentlichen gleichzeitig an die entsprechenden Kanäle bereitgestellt werden.

**6.** Elektronische Vorrichtung (100) nach Anspruch 5, wobei das Sensorbetriebsmodul ferner so gestaltet ist, dass es Signalinformationen, die der Anzahl von Kanälen entspricht, die im Wesentlichen gleichzeitig in dem Sensorpanel (163) angesteuert werden, aus einem Speicher erhält, der Signalinformationen speichert, die der Codesequenz entsprechen.

**7.** Elektronische Vorrichtung (100) nach Anspruch 1, wobei das Sensorbetriebsmodul ferner so gestaltet ist, dass es das Steuersignal an das Sensorpanel (163) an einen Träger eines spezifizierten Frequenzbands bereitstellt.

**8.** Elektronische Vorrichtung (100) nach Anspruch 7, wobei das Sensorbetriebsmodul ferner für folgende Zwecke gestaltet ist:

Filtern eines Signals eines niedrigen Frequenzbands eines empfangenen, Rx, Signals von dem Sensorpanel (163); und
Mischen des gleichen Trägers wie des Steuersignals mit dem gefilterten Rx-Signal.

**9.** Elektronische Vorrichtung (100) nach Anspruch 1, wobei das Sensorbetriebsmodul ferner für folgende Zwecke gestaltet ist:

Empfangen eines Signals für jeden empfangenden Kanal von dem Sensorpanel (163); und
Durchführen eines Match-Filtervorgangs der empfangenen Signale zur Durchführung der Kanalschätzung.

**10.** Verfahren für den Betrieb eines Sensorpanels (163), wobei das Sensorpanel (163) in einem der folgenden enthalten ist: einem Touchscreen-Sensor, einem Fingerabdruckerkennungssensor oder einem Stifterkennungssensor; wobei das Verfahren folgendes umfasst:

Bereitstellen eines Steuersignals an das Sensorpanel (163), wobei das Signal eine Codesequenz aufweist, bei der orthogonale Codes eines Schemas eines Codemultiplexverfahrens, CDM, auf orthogonale Träger eines Schemas eines orthogonalen Frequenzmultiplexverfahrens, OFDM, angewendet werden, und wobei das Signal ein Verhältnis der Spitzenleistung zu der mittleren Leistung, PAPR, mit einem spezifizierten Wert aufweist;
Empfangen eines Signals von dem Sensorpanel (163), das dem an das Sensorpanel (163) bereitgestellten Steuersignal entspricht; und
Erkennen, ob an einem Erkennungspunkt eine Erkennung erfolgt, auf der Basis der Kanalschätzung des empfangenen Signals; ferner mindestens eines der folgenden umfassend:

eine die Spitze reduzierende Zusammensetzung des Übertragungssignals der Multiplikation eines durch die Codesequenz erzeugten Signals mit einem das PAPR reduzierenden Signal, PRS, so dass das PAPR des Steuersignals der spezifizierte Wert ist; oder
Amplituden-Clipping eines Signals, so dass ein PAPR des Steuersignals ein spezifizierter Wert ist, und Kompensieren eines verzerrten orthogonalen Signals des geclippten Signals mit einer spezifizierten Häufigkeit.

**11.** Verfahren nach Anspruch 10, wobei das Bereitstellen des Steuersignals mindestens eines der folgenden umfasst:

Bereitstellen eines Steuersignals mit einem PAPR von mindestens zwei an das Sensorpanel (163);
Umwandeln eines digitalen Signals, das der Codesequenz entspricht, in ein analoges Signal;
Erhalten von Signalinformationen, entsprechend der Anzahl von Kanälen, die im Wesentlichen gleichzeitig in dem Sensorpanel (163) angesteuert werden, aus einem Speicher, der Signalinformationen speichert, die der Codesequenz entsprechen, und Erzeugen eines Steuersignals zur Bereitstellung an den entsprechenden Kanal auf der Basis der als Reaktion auf die Anzahl der Kanäle erhaltenen Signalinformationen;
Erhalten von Codesequenzen, wobei orthogonale Codes eines Schemas eines Codemultiplexverfahrens, CDM, auf orthogonale Träger eines Schemas eines orthogonalen Frequenzmultiplexverfahrens, OFDM, angewendet werden, als Reaktion auf die Anzahl von Kanälen, die im Wesentlichen gleichzeitig in dem Sensorpanel (163) angesteuert werden, und Erzeugen von Steuersignalen auf der Basis der Codesequenzen, und im Wesentlichen gleichzeitiges Bereitstellen der erzeugten Steuersignale an die entsprechenden Kanäle;
Bereitstellen eines Trägers eines spezifizierten Frequenzbands mit dem Steuersignal an das Sensorpanel (163).

**12.** Verfahren nach Anspruch 11, wobei das Bereitstellen des Steuersignals ferner folgendes umfasst:

Anpassen der Anzahl der Codesequenzen als Reaktion auf die Änderung der Anzahl der Kanäle;
Erzeugen von Steuersignalen entsprechend den angepassten Codesequenzen, und wobei die erzeugten Steuersignale im Wesentlichen gleichzeitig an die entsprechenden Kanäle bereitgestellt werden.

**13.** Verfahren nach Anspruch 11, ferner umfassend:

Filtern eines Signals eines niedrigen Frequenzbands eines von dem Sensorpanel (163) empfangenen Signals auf der Basis eines Hochpassfilters (72); und
Mischen des gleichen Trägers wie des Steuersignals mit dem gefilterten empfangenen Signal auf der Basis eines Mischers (74).

**Revendications**

**1.** Dispositif électronique (100) comprenant :

un panneau de capteur (163) inclus dans un capteur d'écran tactile, un capteur de reconnaissance d'empreintes digitales ou un capteur de reconnaissance de stylo, le panneau de capteur (163) étant conçu pour former un champ électrique sur la base d'un signal de pilotage ; et
un module de fonctionnement de capteur conçu pour fournir au panneau de capteur (163) le signal de pilotage, qui a une séquence de code dans laquelle des codes orthogonaux d'un schéma de multiplexage par répartition en code, CDM, sont appliqués à des porteuses orthogonales d'un schéma de multiplexage par répartition en fréquence orthogonale, OFDM, et qui a un rapport de puissance de crête à puissance moyenne, PAPR, d'une valeur spécifiée, le module de fonctionnement de capteur étant en outre conçu pour effectuer au moins l'une des opérations suivantes :

réduction de crête d'une composition de signal de transmission de multiplication d'un signal généré par la séquence de code par un signal de réduction du PAPR, PRS, de sorte que le PAPR du signal de pilotage soit la valeur spécifiée, ou
écrêtage d'amplitude d'un signal tel qu'un PAPR du signal de pilotage soit la valeur spécifiée et compensation d'un nombre spécifié de fois un signal orthogonal distordu du signal écrêté.

**2.** Dispositif électronique (100) selon la revendication 1, le signal de pilotage ayant un PAPR d'au moins deux.

**3.** Dispositif électronique (100) selon la revendication 1, le module de fonctionnement de capteur étant en outre conçu pour :

convertir un signal numérique correspondant à la séquence de code en un signal analogique, et
fournir le signal analogique converti comme signal de pilotage.

**4.** Dispositif électronique (100) selon la revendication 1, le module de fonctionnement de capteur étant en outre conçu pour :
générer des signaux de pilotage sur la base de séquences de code correspondant au nombre de canaux pilotés de manière sensiblement simultanée dans le panneau de capteur (163), et fournir sensiblement simultanément les signaux de pilotage générés aux canaux respectifs.

**5.** Dispositif électronique (100) selon la revendication 4, le module de fonctionnement de capteur étant en outre conçu pour :

ajuster le nombre de séquences de code lors de la modification du nombre de canaux,
générer des signaux de pilotage correspondant aux séquences de code ajustées et fournir de manière sensiblement simultanée les signaux de pilotage générés aux canaux correspondants.

**6.** Dispositif électronique (100) selon la revendication 5, le module de fonctionnement de capteur étant en outre conçu pour obtenir des informations de signal, correspondant au nombre de canaux commandés sensiblement simultanément dans le panneau de capteur (163), à partir d'une mémoire qui stocke des informations de signal correspondant à la séquence de code.

**7.** Dispositif électronique (100) selon la revendication 1, le module de fonctionnement de capteur étant en outre conçu pour fournir une porteuse d'une bande de fréquence spécifiée avec le signal de pilotage au panneau de capteur (163).

**8.** Dispositif électronique (100) selon la revendication 7, le module de fonctionnement de capteur étant en outre conçu pour :

filtrer un signal d'une bande de basse fréquence d'un signal reçu, Rx, provenant du panneau de capteur (163), et mélanger la même porteuse que celle du signal de pilotage avec le signal Rx filtré.

**9.** Dispositif électronique (100) selon la revendication 1, le module de fonctionnement de capteur étant en outre conçu pour :

recevoir un signal du panneau de capteur (163) pour chaque canal de réception, et effectuer un filtrage de correspondance des signaux reçus pour effectuer une estimation du canal.

**10.** Procédé de fonctionnement d'un panneau de capteur (163), le panneau de capteur (163) étant inclus dans un capteur d'écran tactile, un capteur de reconnaissance d'empreintes digitales et/ou un capteur de reconnaissance de stylo,
le procédé comprend les étapes suivantes :

fourniture au panneau de capteur (163) d'un signal de pilotage, qui a une séquence de code dans laquelle des codes orthogonaux d'un schéma de multiplexage par répartition en code, CDM, sont appliqués à des porteuses orthogonales d'un schéma de multiplexage par répartition en fréquence orthogonale, OFDM, et qui a un rapport de puissance de crête à puissance moyenne, PAPR, d'une valeur spécifiée ;
réception d'un signal provenant du panneau de capteur (163) qui correspond au signal de pilotage fourni au panneau de capteur (163) ; et
détection du fait de savoir si la détection a lieu à un point de détection sur la base de l'estimation du canal du signal reçu ; comprenant en outre :

réduction de crête d'une composition de signal de transmission de multiplication d'un signal généré par la séquence de code par un signal de réduction du PAPR, PRS, un nombre spécifié de fois de sorte que le PAPR du signal de pilotage soit la valeur spécifiée ; et/ou
écrêtage d'amplitude d'un signal tel qu'un PAPR du signal de pilotage soit la valeur spécifiée et compensation d'un nombre spécifié de fois un signal orthogonal distordu du signal écrêté.

**11.** Procédé selon la revendication 10, la fourniture du signal de pilotage comprenant :

fourniture d'un signal de pilotage ayant un PAPR d'au moins deux au panneau de capteur (163) ;
conversion d'un signal numérique correspondant à la séquence de code en un signal analogique ;
obtention d'informations de signal, correspondant au nombre de canaux commandés de manière sensiblement simultanée dans le panneau de capteur (163), à partir d'une mémoire qui stocke des informations de signal correspondant à la séquence de code et génération d'un signal de pilotage à fournir au canal respectif sur la base des informations de signal obtenues en réponse au nombre de canaux ;
obtention de séquences de code, dans lesquelles les codes orthogonaux d'un schéma de multiplexage par répartition en code, MRC, sont appliqués aux porteuses orthogonales d'un schéma de multiplexage par répartition en fréquence orthogonale, MDFO, en réponse au nombre de canaux commandés de manière sensiblement simultanée dans le panneau de capteur (163) et génération de signaux de pilotage sur la base de séquences de code et fourniture sensiblement simultanément des signaux de pilotage générés aux canaux respectifs,
fourniture d'une porteuse d'une bande de fréquences spécifiée avec le signal de pilotage au panneau de capteur (163).

**12.** Procédé selon la revendication 11, la fourniture du signal de pilotage comprenant en outre les étapes suivantes :

ajustement du nombre de séquences de code en réponse à la modification du nombre de canaux ; et
génération de signaux de pilotage correspondant aux séquences de code ajustées et fourniture sensiblement simultanément des signaux de pilotage générés aux canaux correspondants.

**13.** Procédé selon la revendication 11 comprenant en outre les étapes suivantes :

filtrage d'un signal d'une bande de basse fréquence d'un signal reçu du panneau de capteur (163) sur la base d'un filtre passe-haut (72) ; et

mélange de la même porteuse que celle du signal de pilotage avec le signal reçu filtré sur la base d'un mélangeur (74).

FIG.1

FIG.2

spreading code 1

0 | 1 | . | L-1

Tx(1)

power
frequency
time

spreading code m

0 | 1 | . | L-1

Tx(m)

FIG.3

EP 3 015 960 B1

<401>

<403>

IDCT

FIG.4

EP 3 015 960 B1

<501>

<503>

Average power level

FIG.5

FIG.6

FIG.7

X ──→ ┌─────────────────┐ ──→ X+N_c ──────→ ┌──────────────┐ ──→ X'
       │ Cilpping(x,A)   │                    │ Processing   │
       └─────────────────┘                    └──────────────┘
            <801>                                  <803>

FIG.8

FIG.9A

```
for i=1:Max_iter
        x_ic = Clipping(x_ic A)
        X_ic = DCT(x_ic )
        X_i '= Processing(X_ic )
        x_i '= IDCT(X_i ')
        PADPR_i= PADPR(x'_i )
        x_i+1= x'_I
end
```

FIG.9B

FIG. 10

<1101>                                    <1103>

DCT

EP 3 015 960 B1

FIG.11

FIG.12

FIG.13

EP 3 015 960 B1

FIG.14

EP 3 015 960 B1

differential amplifier

memory for ADC results — 79

ADC1 ADC2 ... ADC(n-1) ADC(n) — 78

DA DA DA DA — 80

analog LPF — 77

74

analog HPF — 72

LNA — 71

channel selection switch — 60

user interaction area or active area

Tx electrodes — 163b
163 163a
Rx electrodes — 163c

reference Rx electrode

260

digital filter — 21
signal processing and channel estimator — 23
20
processing unit

Rx control — 15
LO generator — 17
synchronicity control — 13
Tx control — 11
10
control unit
210

channel selection switch — 50
44
41
DAC m
DAC m-1
DAC 2
DAC 1
32
230
Sub-carrier generation+ Multi-channel drive signal

FIG.15

```
        ┌─────────────┐
        │    START    │
        └──────┬──────┘
               │
               ▼
┌──────────────────────────────┐
│  OBTAIN CODE INFORMATION      │──1601
│     OF OFDM AND CDM           │
└──────────────┬───────────────┘
               │
               ▼
┌──────────────────────────────┐
│ PROVIDE DRIVE SIGNAL CORRESPONDING│
│      TO CODE INFORMATION TO   │──1603
│ SPECIFIED CHANNEL OF SENSOR PANEL │
└──────────────┬───────────────┘
               │
               ▼
┌──────────────────────────────┐
│   DETECT SPECIFIED CHANNEL    │──1605
│    AND ESTIMATE RX SIGNAL      │
└──────────────┬───────────────┘
               │
               ▼
        ┌─────────────┐
        │     END     │
        └─────────────┘
```

FIG.16

FIG.17

1810

| APPLICATION 1870 | | | | | | |
|---|---|---|---|---|---|---|
| HOME 1871 | DIALER 1872 | SMS/MMS 1873 | IM 1874 | BROWSER 1875 | CAMERA 1876 | ALARM 1877 |
| CONTACT 1878 | VOICE DIAL 1879 | E-MAIL 1880 | CALENDAR 1881 | MEDIA PLAYER 1882 | ALBUM 1883 | CLOCK 1884 |

| API 1860 |
|---|

| MIDDLEWARE 1830 | | | | |
|---|---|---|---|---|
| APPLICATION MANAGER 1841 | WINDOW MANAGER 1842 | MULTIMEDIA MANAGER 1843 | RESOURCE MANAGER 1844 | RUNTIME LIBRARY 1835 |
| POWER MANAGER 1845 | DATABASE MANAGER 1846 | PACKAGE MANAGER 1847 | CONNECTIVITY MANAGER 1848 | |
| NOTIFICATION MANAGER 1849 | LOCATION MANAGER 1850 | GRAPHIC MANAGER 1851 | SECURITY MANAGER 1852 | |

| KERNEL 1820 | |
|---|---|
| SYSTEM RESOURCE MANAGER 1821 | DEVICE DRIVER 1823 |

FIG.18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012056841 A1
- US 2012182259 A1
- US 2011042152 A1
- US 2007109274 A1
- US 2013127779 A1